(19) Europäisches Patentamt / European Patent Office / Office européen des brevets

(11) **EP 4 185 841 B1**

(12) **FASCICULE DE BREVET EUROPEEN**

(45) Date de publication et mention de la délivrance du brevet:
**19.11.2025 Bulletin 2025/47**

(21) Numéro de dépôt: **21733460.6**

(22) Date de dépôt: **18.06.2021**

(51) Classification Internationale des Brevets (IPC):
**G01C 19/5726** *(2012.01)* **G01C 25/00** *(2006.01)*

(52) Classification Coopérative des Brevets (CPC):
**G01C 19/5726; G01C 25/005**

(86) Numéro de dépôt international:
**PCT/EP2021/066712**

(87) Numéro de publication internationale:
**WO 2022/017699 (27.01.2022 Gazette 2022/04)**

(54) **PROCEDE DE CALIBRATION D'UN CAPTEUR INERTIEL VIBRANT**

VERFAHREN ZUR KALIBRIERUNG EINES VIBRIERENDEN INERTIALSENSORS

METHOD FOR CALIBRATING A VIBRATING INERTIAL SENSOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.07.2020 FR 2007755**

(43) Date de publication de la demande:
**31.05.2023 Bulletin 2023/22**

(73) Titulaire: **THALES**
**92190 Meudon (FR)**

(72) Inventeurs:
• **VERCIER, Nicolas**
**26000 VALENCE (FR)**
• **CHAUMET, Bernard**
**26000 VALENCE (FR)**
• **LEVERRIER, Bertrand**
**26000 VALENCE (FR)**

(74) Mandataire: **Atout PI Laplace**
**Immeuble Up On**
**25 Boulevard Romain Rolland**
**CS 40072**
**75685 Paris Cedex 14 (FR)**

(56) Documents cités:
**EP-A1- 2 960 625    US-A1- 2013 204 565**

**Description**

**DOMAINE DE L'INVENTION**

Le domaine de l'invention est celui des capteurs inertiels vibrant dans lesquels deux masses sont mises en vibration. Plus particulièrement l'invention concerne des capteurs inertiels de type MEMs présentant une structure plane, typiquement micro usinés dans une plaque de support.

**ETAT DE LA TECHNIQUE**

Les capteurs inertiels à diapason sont connus de l'homme de l'art. Les capteurs inertiel micro-usinés dans une plaque mince plane, permettant la mesure d'une positon angulaire (gyroscope) ou d'une vitesse angulaire (gyromètres) sont décrits dans le document EP2960625. On en rappelle ci-dessous les principales caractéristiques.

La fabrication de ces capteurs micro-usinés dits encore capteurs à MEMS (Micro-Electro-Mechanical-Systems) utilise des techniques de micro-usinage collectif, gravure, dépôts dopage, etc., semblables à celles qui sont utilisées pour la fabrication de circuits intégrés électroniques, permettant des faibles coûts de production.

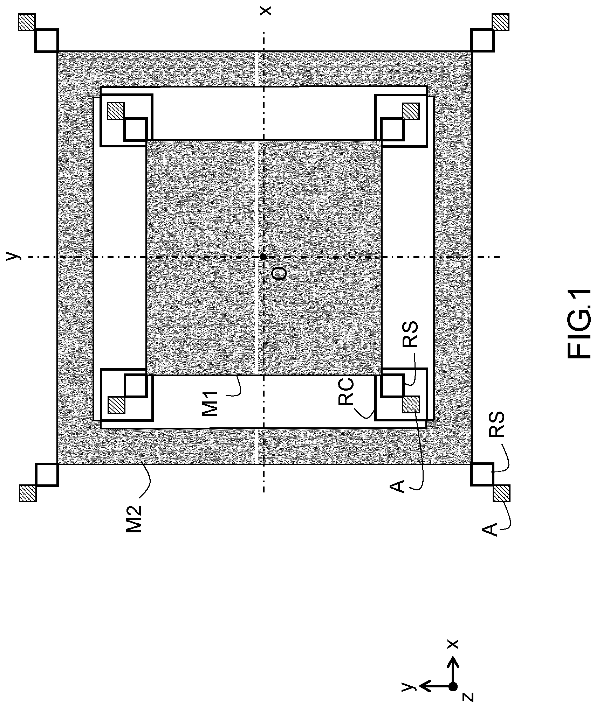

Ces capteurs sont constitués de deux masses mobiles vibrantes M1 et M2 illustrées figure 1 disposées l'une autour de l'autre (concentriques) et excitées en vibration en mode diapason dans le plan de la plaque (plan xy sur la figure) via un ou plusieurs transducteurs d'excitation. Les deux masses sont suspendues à des points d'ancrage fixes A de la plaque par des ressorts de suspension RS (orthotropes). Les deux masses sont couplées entre elles par des éléments de raideurs RC. On vise à obtenir par construction une raideur selon x égale à une raideur selon y et une raideur de couplage entre x et y nulle. Le mode de vibration utile correspond à une vibration linéaire des deux masses en opposition de phase.

Cette architecture forme un système résonnant à deux masses couplées entre elles par l'accélération de Coriolis. Lorsque le gyromètre tourne autour de l'axe z perpendiculaire au plan xy dénommé axe sensible la composition de la vibration forcée avec le vecteur de rotation angulaire engendre, par effet Coriolis, des forces qui mettent les masses mobiles en vibration naturelle perpendiculairement à la vibration d'excitation et à l'axe sensible ; l'amplitude de la vibration naturelle est proportionnelle à la vitesse de rotation. L'électronique associée au capteur calcule l'amplitude de la vibration selon la direction orthogonale à la direction d'excitation quelle que soit celle-ci (connue par hypothèse).

Le capteur peut fonctionner en mode gyromètre : la direction de vibration naturelle est maintenue fixe par rapport au boîtier du capteur en modifiant l'excitation et l'information de sortie est alors une image de l'énergie nécessaire qu'il faut appliquer aux transducteurs d'excitation pour maintenir fixe la direction de vibration naturelle malgré les mouvements du boîtier. La mesure de cette contre force donne accès à la vitesse angulaire $\Omega$ du capteur. Le capteur peut aussi fonctionner en mode gyroscope : la direction de la vibration naturelle est laissée libre et est détecté pour donner l'orientation angulaire du capteur.

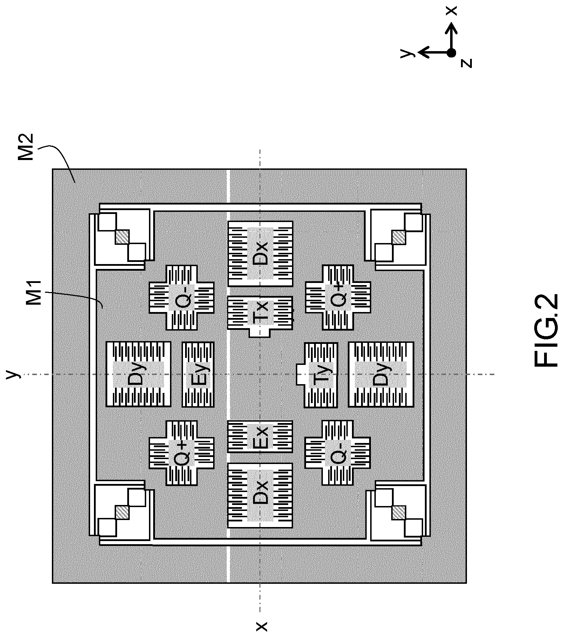

L'ensemble de la structure du résonateur est axisymétrique autour de deux axes x et y définissant un repère capteur tel qu'illustré figure 2. On entend par axisymétrique que la structure est symétrique par rapport à x et symétrique par rapport à y. Comme décrit ci-dessous ces axes constituent les directions principales des actionneurs/détecteurs, qui opèrent selon ces deux axes.

Pour exciter le mode de vibration utile dans une direction donnée quelconque du plan, on décompose le signal d'excitation en deux composantes d'amplitudes respectives ajustées, appliquées respectivement au transducteur d'excitation Ex agissant selon la direction x et au transducteur d'excitation Ey agissant selon la direction y associés à au moins une masse mobile (masse interne M1 sur la figure 2). On applique donc à ces transducteurs des forces d'excitation pour générer et entretenir l'onde vibrante : ils sont aptes à entretenir la vibration forcée via une commande d'amplitude (lutter contre l'amortissement du MEMs) et selon n'importe quelle direction du plan xy, via une commande de précession (faire tourner l'onde).

On détecte les mouvements de l'onde résultante en combinant l'information recueillie par au moins une paire de transducteurs de détection Dx, Dy récupérant la position de la masse dans sa course dans le repère capteur xy (deux de chaque sur la figure 2) et associés à au moins une masse mobile.

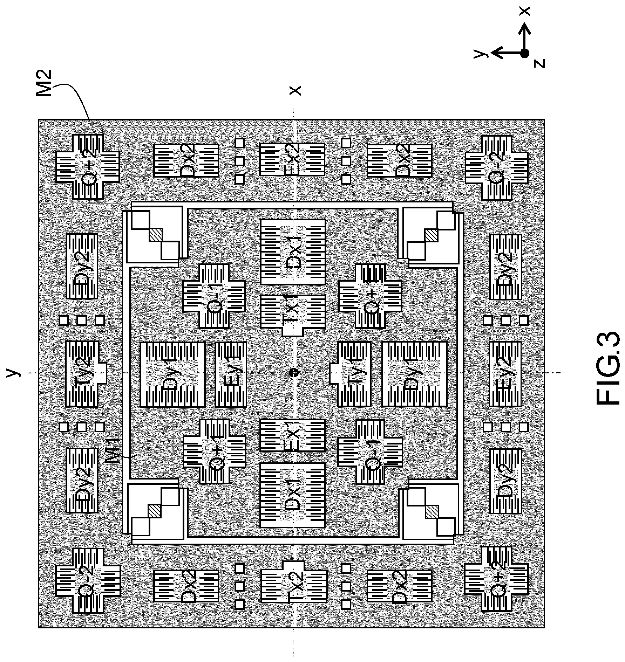

Préférentiellement on réalise des transducteurs sur les deux masses, tel qu'illustré figure 3, l'indice 1 correspondant à la masse M1 et l'indice 2 à la masse M2. Les figures 2 et 3 constituent des exemples d'agencement non limitatifs, beaucoup d'autres types d'agencement sont possibles, avec la contrainte de réaliser un système axisymétrique.

Les transducteurs sont préférentiellement réalisés par des électrodes en peigne interdigités à variation d'entrefer. Il y a un peigne fixe dont les dents sont solidaires d'une électrode fixe de la plaque usinée et un peigne mobile dont les dents, interdigitées avec les dents du peigne fixe, sont solidaires de la masse mobile associée au transducteur considéré.

L'excitation consiste à appliquer une force d'excitation via une tension alternative entre le peigne mobile et le peigne fixe, à la fréquence de vibration souhaitée (fréquence de résonance mécanique de la masse mobile suspendue, typiquement de l'ordre de 10 KHz). Le mouvement engendré est perpendiculaire aux dents du peigne.

La détection consiste à appliquer une tension de polarisation entre le peigne fixe et le peigne mobile et à observer les variations de charge qui résultent des variations de capacité entre le peigne fixe et le peigne mobile dues aux variations d'espacement entre les dents du peigne fixe et du peigne mobile. Le mouvement mesuré est le mouvement perpendiculaire aux dents du peigne.

L'ensemble vibrant masses/ressorts est caractérisé par une matrice de raideur symétrique 2x2 dénommée K. Pour un fonctionnement optimal du capteur on cherche à obtenir une matrice de raideur finale proportionnelle à l'identité. Du fait des imperfections de réalisation ce n'est pas le cas (voir plus loin).

On dénomme axe x' l'axe de vibration de l'onde. Cet axe définit un repère x'y', avec y' perpendiculaire à x' dans le plan du MEMs. L'axe x' fait avec l'axe x un angle dénommé angle électrique θ et le repère x'y' est dénommé repère onde. On supposera pour l'instant que l'onde vibre selon x (x'=x).

L'équation dynamique décrivant un gyromètre vibrant peut se ramener à une modèle mono-masse de masse M, dont le déplacement X, Y est modélisé comme suit :

$$M \begin{bmatrix} \ddot{X} \\ \ddot{Y} \end{bmatrix} + A \begin{bmatrix} \dot{X} \\ \dot{Y} \end{bmatrix} + K \begin{bmatrix} X \\ Y \end{bmatrix} + C \begin{bmatrix} \dot{X} \\ \dot{Y} \end{bmatrix} = \begin{bmatrix} FX \\ FY \end{bmatrix} \qquad (1)$$

M est la matrice de masse, pour simplifier dans la suite on va considérer que c'est un scalaire,

A est la matrice d'amortissement, K est la matrice de raideur, C est la matrice de Coriolis et vaut : $\begin{bmatrix} 0 & -M\Omega \\ M\Omega & 0 \end{bmatrix}$ où

M est la masse et Ω est la vitesse angulaire,

FX et FY sont les forces d'excitation appliquées suivant l'axe x et l'axe y du gyromètre. Ces forces sont issues de commandes Cr, Ca, Cq et Cp calculées dans le repère onde par des asservissements connus de l'homme de l'art (et non décrits ici), à partir de la démodulation des signaux détectés relatifs au déplacement de la vibration. A partir des mesure du mouvement de l'onde X et Y réalisés dans le repère xy, on applique une rotation pour passer dans le repère onde x'y', puis les commande sont déterminées (via une démodulation de signaux détectés) et on réapplique une rotation inverse pour repasser dans le repère xy, dans lequel sont appliquées les forces d'excitation. Les commandes sont déterminées de sorte que le déplacement de la masse c'est-à-dire l'onde de vibration du gyromètre, prenne une forme voulue. Généralement la forme souhaitée est un déplacement linéaire oscillant dans une direction donnée par rapport au repère xy du gyromètre :

La commande Cr correspond aux forces de raideur pour contrôler la fréquence propre du résonateur ; la phase étant l'intégrale de la fréquence, Cr contrôle donc la phase de l'onde. Cr est une force externe appliquée au résonateur (en estimant le déplacement) qui modifie la fréquence de la vibration, en ralentissant ou accélérant la vibration lorsque celle-ci vibre, mais ne modifie pas la raideur intrinsèque du résonateur.

La commande Ca correspond aux forces d'amplitude pour contrôler l'amplitude de l'onde et la commande Cp correspond aux forces de précession qui permettent de contrôler la vitesse angulaire de l'onde.

La commande Cq correspond aux forces de quadrature pour contrôler la quadrature de l'onde (c'est-à-dire garantir la linéarité de l'onde ou, quand l'onde souhaitée n'est pas linéaire, elle est généralement elliptique, et Cq permet de contrôler le petit axe de l'ellipse).

Il est bien connu de l'homme de l'art que les imperfections de réalisation du capteur conduisent à des erreurs sur les informations délivrées en sortie de celui-ci. La plupart de ces imperfections doivent être compensées par un équilibrage du gyromètre.

Il est connu de réaliser cette compensation en enlevant localement de la matière, par exemple par ablation laser pour modifier la répartition de masse ou de raideur. Cette méthode est coûteuse voire impossible à mettre en œuvre sur un gyromètre micro-usiné dans une plaque mince de silicium, dont les mouvements de détection et d'excitation sont situés dans le plan du substrat.

Un premier type d'imperfection à l'origine de la non identité de la matrice de raideur K est l'écart de fréquence entre l'axe principal de vibration et l'axe perpendiculaire à la vibration dans le plan du MEMs, correspondant à une matrice de raideur du système dans laquelle la raideur selon l'axe x est différente de la raideur selon l'axe y. On cherche à égaliser les fréquences de résonance selon les deux axes précités au moyen d'une raideur électrostatique ajustable. Cette raideur électrostatique, dite raideur d'égalisation, est délivrée par des transducteurs d'ajustement de la fréquence Tx, Ty (au moins une paire Tx Ty sur au moins une masse voir figure 2) agissant selon les directions x et y. Son application a pour but d'égaliser les raideurs selon les deux axes de la vibration, en réduisant la valeur de la raideur la plus élevée, rendant ainsi les fréquences égales. La correction de fréquence est dénommé « trimming » de fréquence en anglais.

Un deuxième type d'imperfection provient du couplage mécanique entre l'axe de la vibration et l'axe perpendiculaire, à l'origine du biais dit en quadrature. Il s'agit des défauts d'anisotropie de raideur dynamique de l'ensemble des deux masses vibrantes, se traduisant par une vibration non plus linéaire mais elliptique, et correspondant à l'existence d'une raideur de couplage non nulle. Une solution connue de l'état de la technique est d'annuler ce terme en appliquant sur le système une force F (sinusoïdale) via les transducteurs d'excitation. Le problème est que l'application de cette force n'est pas exercée exactement au bon moment (erreurs de phase) et dans le bon axe (erreur de gain), provoquant l'application de dérives. Pour éviter d'appliquer une force F on vient physiquement annuler le terme de couplage non pas en appliquant une force mais en changeant directement la raideur du résonateur via au moins une paire de transducteurs Q+ et Q- tel qu'illustré figure 2 (2 paires Q+/Q- sur la figure 2). Ces transducteurs opérant sur X et Y sont disposés sur les diagonales pour respecter la symétrie et l'anisotropie « géométrique », et pour des raisons d'encombrement. La correction du biais de quadrature est dénommée « trimming» (également « trim ») de quadrature. Les transducteurs Tx, Ty, Q+ et Q- sont préférentiellement également des peignes interdigités comme illustré figures 2 et 3, commandés par des tensions continues et dénommés peignes de trimming.

Ainsi les transducteurs du « trim » de quadrature modifient les caractéristiques du capteur MEMs pour supprimer les couplages entre les deux axes du repère onde et les transducteurs du « trim » de fréquence modifient les caractéristiques du capteur MEMs pour supprimer les écarts de fréquence entre les deux axes du repère onde. Ils modifient les caractéristiques intrinsèques du résonateur. Autrement dit si on joue sur la tension de trimming même lorsque le résonateur ne vibre pas, on change sa raideur, contrairement à la commande Cr décrite ci-dessus qui est une force qui vient ralentir ou accélérer la vibration lorsque celle-ci vibre. Le trimming est réalisé à l'aide une tension continue ou basse fréquence qui vient modifier la raideur électrostatique du capteur sans avoir besoin d'évaluer la phase de la vibration, alors que la commande Cr est réalisée par l'envoi d'une tension sinusoïdale (à la fréquence de résonance du capteur) après avoir estimé la phase de la vibration. Le changement de fréquence réalisé par trimming est donc de nature complètement différente d'un changement de fréquence réalisé par une commande Cr.

Ils sont commandés par des asservissements de trim (connus de l'homme de l'art) qui génèrent une commande de trim de quadrature CTxy, une commande de trim de fréquence selon X CTx et une commande de trim de fréquence selon Y CTy. Les commandes des trims sont des tensions continues.

Ainsi via les peignes de trimming on modifie directement la matrice de raideur K à l'aide d'une matrice Kt, et l'équation dynamique du gyromètre est :

$$M \begin{bmatrix} \ddot{X} \\ \ddot{Y} \end{bmatrix} + A \begin{bmatrix} \dot{X} \\ \dot{Y} \end{bmatrix} + K \begin{bmatrix} X \\ Y \end{bmatrix} + C \begin{bmatrix} \dot{X} \\ \dot{Y} \end{bmatrix} - Kt \begin{bmatrix} X \\ Y \end{bmatrix} = \begin{bmatrix} FX \\ FY \end{bmatrix} \quad (2)$$

Le peigne de trimming de fréquence selon x modifie la raideur du résonateur en engendrant une matrice Kt:

$$Kt = \begin{bmatrix} Kx & 0 \\ 0 & 0 \end{bmatrix}$$

Le peigne de trimming de fréquence selon y modifie la raideur du résonateur en engendrant une matrice Kt :

$$Kt = \begin{bmatrix} 0 & 0 \\ 0 & Ky \end{bmatrix}$$

Le peigne de trimming de quadrature modifie la raideur du résonateur en engendrant une matrice Kt :

$$Kt = \begin{bmatrix} 0 & Kxy \\ Kxy & 0 \end{bmatrix}$$

Les raideurs Kx, Ky et Kxy correspondent aux commandes CTx CTy et CTxy (tensions continues) à un facteur de gain près. Les commandes CTx, CTy et CTxy sont des tensions qui à travers les peignes modifient les raideurs Kx, Ky et Kxy. Appliquer des commandes de trimming revient à modifier la matrice K dans l'équation différentielle (2), en transformant K en K-Kt..

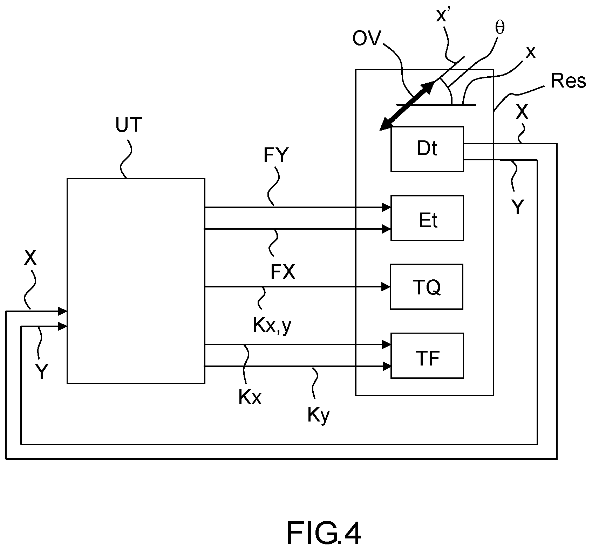

La figure 4 illustre le fonctionnement d'un capteur inertiel selon l'état de l'art. Le résonateur Res comprend les différents transducteurs décrits ci-dessus et symbolisés par Et (excitation), Dt (détection), TQ (trim quadrature) et TF (trim fréquence). L'onde de vibration OV vibre selon X' avec un angle électrique θ. Une unité de traitement UT procède aux différents calculs pour les asservissements et génère, pour les corrections, l'ensemble des commandes/forces précitées aux différents transducteurs. Les commandes d'excitation et de trim sont déterminées par des asservissements différents

Dans l'unité de traitement les mouvements détectés X et Y sont d'abord transformés dans le repère onde x'y' par une rotation selon θ, puis les commandes d'excitation sont déterminées dans le repère onde par des asservissements sous la forme de tensions électriques Ux' et Uy' :

$$Ux' = iCa+Cr$$

$$Uy' = iCp+Cq$$

Les commandes de trim sont également déterminées par des asservissements dédiés.

Les commandes sont ensuite rebasculées dans le repère xy par une rotation inverse puis appliquées (à un facteur de gain près) aux différents transducteurs.

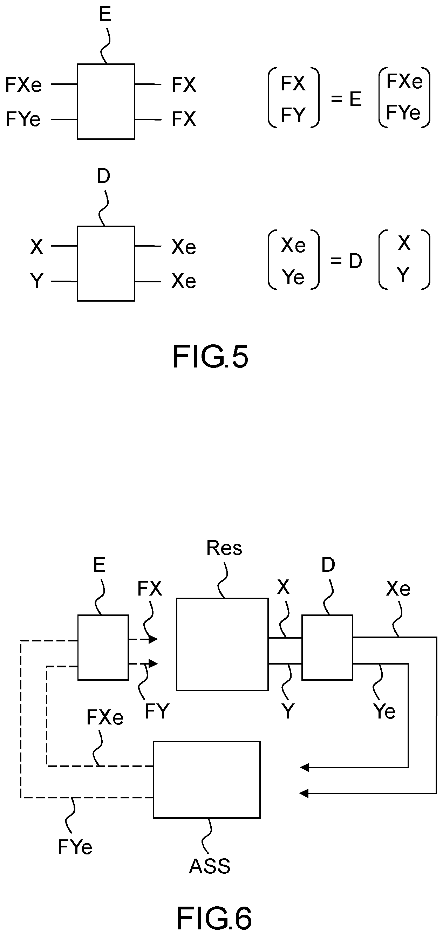

La chaine d'excitation correspond à l'électronique et aux actionneurs permettant d'appliquer les forces calculées par les asservissements aux transducteurs d'excitation. Elle prend en entrée des forces estimées par les asservissements FXe et FYe et donnent en sortie les forces réellement appliquées au résonateur FX et FY. On définit une matrice d'excitation E représentative de l'effet de la chaine d'excitation (voir également figure 5) :

$$\begin{bmatrix} FX \\ FY \end{bmatrix} = E \begin{bmatrix} FXe \\ FYe \end{bmatrix} = \begin{bmatrix} E11 & E12 \\ E21 & E22 \end{bmatrix} \begin{bmatrix} FXe \\ FYe \end{bmatrix} \quad (3)$$

où E est la matrice d'excitation.

Il y a en fait deux types de problèmes : (1) le fait qu'une force appliquée suivant x apparaisse suivant l'axe y et inversement : il s'agit des termes non diagonaux E12 et E21. (2) Le fait que les forces appliquées suivant x et y n'aient pas les mêmes gains : il s'agit du fait que E11 est généralement différent de E22.

Une matrice d'excitation E parfaite a la forme suivante :

$$\begin{bmatrix} E11 & 0 \\ 0 & E11 \end{bmatrix}$$ où E11 est un gain réel.

La chaine de détection correspond à l'électronique et aux senseurs permettant de détecter les déplacements X et Y de l'onde de vibration. Elle prend en entrée les déplacements réels X et Y et donne en sortie les déplacements estimés Xe et Ye. On définit une matrice de détection D représentative de l'effet de la chaine de détection (voir également figure 5):

$$\begin{bmatrix} Xe \\ Ye \end{bmatrix} = D \begin{bmatrix} X \\ Y \end{bmatrix} = \begin{bmatrix} D11 & D12 \\ D21 & D22 \end{bmatrix} \begin{bmatrix} X \\ Y \end{bmatrix} \quad (4)$$

où D est la matrice de détection.

Une matrice de détection D parfaite a la forme suivante :

$$\begin{bmatrix} D11 & 0 \\ 0 & D11 \end{bmatrix}$$ où D11 est un gain réel.

La figure 6 illustre l'effet des chaines d'excitation et de détection respectivement avec les traits pointillés et pleins. Au niveau de l'excitation les valeurs des forces à appliquer FXe et FYe sont calculées par les asservissements Ass de l'unité de traitement. Du fait de la chaine d'excitation les valeurs réellement appliquées au résonateur sont FX et FY. De même les valeurs de déplacement X et Y vraies subissent une transformation par la chaine de détection, et ce sont Xe et Ye qui sont injectés en entrée des asservissements Ass. Les erreurs de détection et d'excitation engendrent des erreurs de dérive et notamment des erreurs de dérives moyennes non compensables par des moyens de rotation électrique.

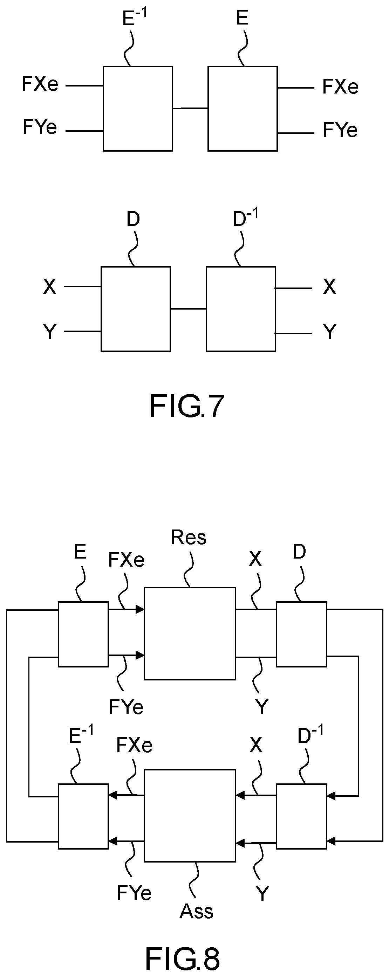

Afin de corriger ces erreurs, c'est-à-dire procéder à une calibration du capteur, une solution est de déterminer les inverses inv(E) et inv(D) (ou $E^{-1}$ et ou $D^{-1}$) de ces matrices E et D, afin de pouvoir appliquer à chaque chaine la matrice inverse correspondante. Pour une correction parfaite on obtient alors les valeurs correctes à appliquer aux résonateur et les valeurs correctes détectées, tel qu'illustré figure 7. Un fonctionnement parfaitement corrigé du capteur est illustré figure 8. On applique inv(E) en sortie de l'asservissement Ass et on applique inv(D) aux mesures en sortie de détection, avant l'injection de celles-ci dans l'asservissement. On a alors pour une correction parfaite FXe=FX et FYe = FY et Xe=X et Ye=Y.

Le document US9927256 décrit une méthode de calibration permettant de déterminer la correction d'au moins une commande d'excitation appliquée à un gyromètre : a amplitude (commande Ca), $\varphi$ phase (commande Cr), $\theta$ angle (commande Cp), b quadrature (commande Cq).

La méthode consiste à envoyer une force sinusoïdale à une fréquence proche de la fréquence de résonance du capteur de vibration du capteur qui perturbe le gyromètre, et à exploiter les sorties détectées pour en extraire les erreurs d'excitation et de détection en supposant qu'en régime forcé, les signaux de détection ont des composantes sinusoïdales identiques à celle des perturbations. Les signaux de détection sont exploités pour extraire les matrices A et B en utilisant le fait que les signaux détectés ont une signature fréquentielle identique à la perturbation insérée car le système est linéaire. Ces matrices A et B sont alors insérées dans l'asservissement et on itère le procédé jusqu'à un critère prédéfini. Cependant au-delà du principe général la méthode de détermination des coefficients des matrices A et B n'est pas décrite, et leur rôle de correction n'est pas expliqué. L'esprit de cette méthode est d'envoyer des commandes d'excitation particulières et de regarder ce qui se passe au niveau des signaux de détection. L'envoi de forces sur les commandes d'excitation fait varier la forme de l'onde. Tous les coefficients des matrices A et B ne sont pas observables (déterminables) par le jeu d'observations apporté par les commandes d'excitation car les observations faites au niveau des signaux de détection présentent beaucoup de redondances entre elles, rendant certains coefficients de A et B inobservables bien que le nombre d'équations ait l'air suffisant vis-à-vis du nombre d'inconnus dans le système.

Un but de la présente invention est de remédier aux inconvénients précités en proposant une méthode alternative de calibration permettant de déterminer simultanément la matrice de détection inverse et la matrice d'excitation inverse par un calcul matriciel direct où tous les termes des matrices sont observables.

## DESCRIPTION DE L'INVENTION

La présente invention a pour objet un procédé de calibration d'un capteur angulaire inertiel, le capteur inertiel comprenant :

- un résonateur présentant une structure plane et axisymétrique autour de deux axes x et y perpendiculaires entre eux définissant un repère capteur xy et comprenant deux masses mobiles vibrantes disposées l'une autour de l'autre configurées pour vibrer en opposition de phase à une fréquence de vibration ($\omega$) et selon une direction x' définissant un repère onde x'y', l'onde de vibration selon x' faisant un angle électrique par rapport à l'axe x,

- le résonateur comprenant en outre une pluralité de transducteurs électrostatiques commandés par des tensions électriques et opérant selon les deux axes x ou y, dont au moins, sur au moins une des deux masses,

- une paire de transducteurs de détection configurés pour détecter les mouvements de l'onde de vibration selon x et y et une paire de transducteurs d'excitation auxquels sont appliquées des forces d'excitation respectivement selon x et y, via une pluralité de commandes d'excitation déterminées par des asservissements à partir des mouvements détectés, et pour maintenir l'onde de vibration selon une forme souhaitée et vibrant selon x', et

- une paire de transducteurs de compensation d'un biais en quadrature, commandés via une commande de quadrature CTxy, et une paire de transducteur d'ajustement de fréquence, commandés via respectivement une commande de fréquence CTx selon x et une commande de fréquence CTy selon y, les trois commandes CTx, CTy et CTxy étant dénommées commandes de trim CTi indicées i avec i=1,2, 3,

le procédé s'appliquant lorsque le capteur est en fonctionnement selon un mode gyromètre, et comprenant les étapes consistant à :

**A** pour au moins deux angles électrique de l'onde de vibration :
**A1** appliquer séquentiellement via chacune des trois commandes de trim CTi une perturbation sinusoïdale de raideur PSi présentant une fréquence de perturbation fi, et pour chaque perturbation appliquée:
**A11** déterminer et mémoriser une force d'excitation estimée Fei à appliquer au résonateur en présence de ladite perturbation PSi, à partir des commandes d'excitation déterminées par les asservissements,

**B** déterminer, à partir desdites trois forces d'excitation estimée Fei i=1,2,3 mémorisées à l'étape **A11,** fonction desdits angles électriques et des perturbations appliquées, trois matrices 2x2 M'i, une matrice M'i étant représentative de la réponse du gyromètre à la perturbation PSi,

**C** déterminer et mémoriser une matrice d'excitation inverse estimée $\widehat{inv(E)}$ et une matrice de détection inverse estimée $\widehat{inv(D)}$ à partir des trois matrices M'i déterminées à l'étape **B,** une matrice d'excitation E et une matrice de détection D étant respectivement représentative des effets de la chaine d'excitation et de l'effet de la chaine de détection du capteur.

Selon un mode de réalisation chaque force d'excitation estimée Fei se décompose en une force d'excitation standard estimée Fec correspondant à un asservissement standard du capteur et une force d'excitation de compensation de la perturbation estimée Fepi,
et dans lequel l'étape **B** comprend les sous étapes consistant à :

- **B1** démoduler chaque force d'excitation estimée Fei par la fréquence de vibration puis par la fréquence de perturbation associée fi pour obtenir une amplitude de ladite force d'excitation de compensation de la perturbation Fepi,
- **B2** déterminer la matrice M'i à partir de l'amplitude de ladite force Fepi ;

Selon un mode de réalisation l'étape **A** est mise en œuvre avec une pluralité d'angles électriques, lesdites matrices M'i étant alors déterminées à l'étape **B** par un filtrage statistique minimisant la contribution du bruit du capteur.

Selon un mode de réalisation chaque matrice représentative M'i déterminée à l'étape **B** est de la forme :

$$\text{M'i} = \widehat{inv(E)}.\text{Mi}.\ \widehat{inv(D)}$$

Mi défini par : $M1 = \begin{bmatrix} 1 & 0 \\ 0 & 0 \end{bmatrix}$ ; $M2 = \begin{bmatrix} 0 & 0 \\ 0 & 1 \end{bmatrix}$ ; et $M3 = \begin{bmatrix} 0 & 1 \\ 1 & 0 \end{bmatrix}$

Selon un mode de réalisation on considère les matrices $\widehat{inv(E)}$ et $\widehat{inv(D)}$ proches de matrices unitaires et s'exprimant :

$$\widehat{inv(E)} = 1+A$$

$$\widehat{inv(D)} = 1+B$$

les trois matrices représentatives M'i déterminées à l'étape **B** s'exprimant alors, en négligeant les terme de deuxième ordre :

$$\text{M'i} = \text{AMi+MiB}$$

et dans lequel l'étape **C** comprend une sous étape consistant à déterminer lesdites matrice A et B à partir desdites matrices M'i.

Préférentiellement les fréquences de perturbation fi i=1,2,3 sont comprises entre 1000 fois moins et 100000 fois moins que la fréquence de vibration de l'onde.

Préférentiellement les fréquences fi sont inférieures à 10Hz.

Selon un mode de réalisation chaque perturbation PSi présente une amplitude identique pour tous les angles électriques.

Selon un mode de réalisation chaque force d'excitation estimée Fei se décompose en une force d'excitation standard estimée Fec correspondant à un asservissement standard du capteur et une force d'excitation de compensation de la perturbation estimée Fepi, et dans lequel une amplitude de la perturbation est choisie de sorte que une amplitude de la force Fepi soit au moins 10 fois plus forte qu'une amplitude de la force Fec.

L'invention concerne également un procédé de mesure d'une vitesse angulaire d'un porteur sur lequel est disposé ledit capteur inertiel comprenant :

- une phase de calibration dudit capteur inertiel mettant en œuvre le procédé de calibration selon l'une des revendications 1 à 9, réalisée à la mise en route du capteur inertiel,

- une étape **D** de fonctionnement dudit capteur inertiel dans laquelle lesdites matrices $\widehat{inv(E)}$ et $\widehat{inv(D)}$ mémorisées sont appliquées, ladite matrice d'excitation inverse estimée $\widehat{inv(E)}$ étant appliquée aux forces d'excitation déterminées par lesdits asservissements, préalablement à l'envoi sur les transducteurs d'excitation, de manière à pré-compenser lesdites forces d'excitation, et ladite matrice de détection inverse estimée $\widehat{inv(D)}$ étant appliquée aux valeurs de mouvement détectées de manière à corriger lesdites valeurs de mouvement détectées.

Selon une variante le procédé de mesure d'une vitesse angulaire d'un porteur sur lequel est disposé ledit capteur inertiel, comprend:

- une phase de calibration dudit capteur inertiel mettant en œuvre le procédé de calibration selon l'une des revendications 1 à 9, réalisée lorsque le capteur est en cours de fonctionnement, la mesure de la vitesse angulaire étant alors interrompue,

- une étape **D'** de mesure de la vitesse angulaire, mise en œuvre pendant la phase de calibration, réalisée par un capteur inertiel additionnel également disposé sur le porteur,

- une étape **D** de fonctionnement dudit capteur inertiel dans laquelle lesdites matrices $\widehat{inv(E)}$ et $\widehat{inv(D)}$ mémorisées sont appliquées, ladite matrice d'excitation inverse estimée $\widehat{inv(E)}$ étant appliquée aux forces d'excitation déterminées par lesdits asservissements, préalablement à l'envoi sur les transducteurs d'excitation, de manière à pré-compenser lesdites forces d'excitation, et ladite matrice de détection inverse estimée $\widehat{inv(D)}$ étant appliquée aux valeurs de mouvement détectées de manière à corriger lesdites valeurs de mouvement détectées.

L'invention concerne également un capteur angulaire inertiel comprenant :

- un résonateur présentant une structure plane et axisymétrique autour de deux axes x et y perpendiculaires entre eux définissant un repère capteur xy et comprenant deux masses mobiles vibrantes disposées l'une autour de l'autre configurées pour vibrer en opposition de phase à une fréquence de vibration et selon une direction x' définissant un repère onde x'y', l'onde de vibration (OV) selon x' faisant un angle électrique (θ) par rapport à l'axe x,

- le résonateur comprenant en outre une pluralité de transducteurs électrostatiques commandés par des tensions électriques et opérant selon les deux axes x ou y, dont au moins, sur au moins une des deux masses :

  - une paire de transducteurs d'excitation auxquels sont appliquées des forces d'excitation respectivement selon x et y, via une pluralité de commandes d'excitation, pour maintenir l'onde de vibration selon une forme souhaitée et vibrant selon x', et une paire de transducteurs de détection configurés pour détecter les mouvements de l'onde de vibration selon x et y,
  - une paire de transducteurs de compensation d'un biais en quadrature, commandés via une commande de quadrature CTxy, et une paire de transducteur d'ajustement de fréquence, commandés via respectivement une commande de fréquence CTx selon x et une commande de fréquence CTy selon y, les trois commandes CTx, CTy et CTxy étant dénommées commandes de trim indicées CTi avec i=1,2, 3,

  lesdites commandes d'excitation étant déterminées par des asservissements à partir des mouvements détectés, le capteur étant en fonctionnement selon un mode gyromètre,

  les trois commandes de trim CTi étant configurées pour appliquer séquentiellement une perturbation sinusoïdale de raideur PSi présentant une fréquence de perturbation fi, pour au moins deux angles électrique (θj) de l'onde de vibration,

  - une unité de traitement configurée pour :

    - déterminer et mémoriser, pour chaque perturbation appliquée, une force d'excitation estimée Fei à appliquer au résonateur en présence de ladite perturbation PSi, à partir des commandes d'excitation déterminées par les asservissements,

    - déterminer, à partir desdites trois forces d'excitation estimée Fei i=1,2,3 mémorisées à l'étape précédente, fonction desdits angles électriques et des perturbations appliquées, trois matrices 2x2 M'i, une matrice M'i étant représentative de la réponse du gyromètre à la perturbation PSi,

    - déterminer et mémoriser une matrice d'excitation inverse estimée $\widehat{inv(E)}$ et une matrice de détection inverse estimée $\widehat{inv(D)}$ à partir des trois matrices M'i déterminées à l'étape précédente, une matrice d'excitation E et une matrice de détection D étant respectivement représentative des effets de la chaine d'excitation et de l'effet de la chaine de détection du capteur,

ladite matrice d'excitation inverse estimée $\widehat{inv(E)}$ étant destinée à être appliquée aux forces d'excitation déterminées par lesdits asservissements, préalablement à l'envoi sur les transducteurs d'excitation, de manière à pré-compenser lesdites forces d'excitation, et ladite matrice de détection inverse estimée $\widehat{inv(D)}$ étant destinée à être appliquée aux valeurs de mouvement détectées de manière à corriger lesdites valeurs de mouvement détectées, lorsque le capteur est en fonctionnement.

La description suivante présente plusieurs exemples de réalisation du dispositif de l'invention : ces exemples sont non limitatifs de la portée de l'invention. Ces exemples de réalisation présentent à la fois les caractéristiques essentielles de l'invention ainsi que des caractéristiques additionnelles liées aux modes de réalisation considérés.

L'invention sera mieux comprise et d'autres caractéristiques, buts et avantages de celle-ci apparaîtront au cours de la description détaillée qui va suivre et en regard des dessins annexés donnés à titre d'exemples non limitatifs et sur lesquels :

[Fig 1] La figure 1 déjà citée illustre un capteur MEMS constitué de deux masses mobiles vibrantes disposées l'une autour de l'autre.

[Fig 2] La figure 2 déjà citée illustre la structure d'un capteur MEMS avec un résonateur axisymétrique autour de deux axes x et y définissant un repère capteur

[Fig 3] La figure 3 déjà citée illustre un capteur MEMS avec des transducteurs sur les deux masses.

[Fig 4] La figure 4 déjà citée illustre le fonctionnement d'un capteur inertiel selon l'état de l'art.

[Fig 5] La figure 5 déjà citée illustre l'effet de la matrice d'excitation sur les valeurs estimées par les asservissements, et l'effet de la matrice de détection sur les mouvements de l'onde vibratoire.

[Fig 6] La figure 6 déjà citée illustre l'effet des chaines d'excitation et de détection respectivement avec les traits pointillés et pleins.

[Fig 7] La figure 7 déjà citée illustre une correction parfaite en excitation et en détection.

[Fig 8] La figure 8 déjà citée illustre un fonctionnement parfaitement corrigé du capteur

[Fig 9] La figure 9 illustre l'application d'une matrice d'excitation inverse estimée et donc non parfaite $\widehat{inv(E)}$ telle que déterminée par le procédé selon l'invention.

[Fig 10] La figure 10 illustre l'application d'une matrice de détection inverse estimée et donc non parfaite $\widehat{inv(D)}$ telle que déterminée par le procédé selon l'invention.

[Fig 11] La figure 11 illustre le procédé de calibration d'un capteur selon l'invention.

[Fig 12] La figure 12 illustre le capteur angulaire inertiel 10 mettant en œuvre le procédé de calibration selon l'invention.

[Fig 13] La figure 13 illustre un capteur en fonctionnement mettant en œuvre la calibration selon l'invention.

## DESCRIPTION DETAILLEE DE L'INVENTION

Le procédé de calibration selon l'invention s'applique à un capteur angulaire inertiel comprenant un résonateur Res et des transducteurs Et, Dt, TF et TQ commandés par des commandes d'excitation (Et) et de trim (TF, TQ) tel que décrit précédemment. L'onde de vibration OV vibre selon une fréquence de vibration ω. Le procédé selon l'invention s'applique avec un capteur inertiel fonctionnant en mode gyromètre, les asservissements des commandes d'excitation étant en fonctionnement.

Un but de l'invention est un procédé de calibration permettant de déterminer une matrice d'excitation inverse estimée $\widehat{inv(E)}$ et une matrice de détection inverse estimée $\widehat{inv(D)}$, afin d'améliorer le fonctionnement du capteur en minimisant les erreurs d'excitation et de détection.

A cette fin on envoie des perturbations non pas sur les commandes d'excitation comme dans le document US9927256 mais via les commandes de trim. Ces commandes ont, dans le fonctionnement classique d'un gyroscope comprenant ces transducteurs additionnels (qui n'est pas traité dans le document cité ci-dessus), un rôle totalement différent de celui des commandes d'excitation, tel qu'expliqué ci-dessus.

Dans la suite les commandes de trim CTx, CTy et CTxy sont dénommées respectivement CTi, i=1,2, 3, soit CT1 pour CTx, CT2 pour CTY et CT3 pour CTxy.

Il s'agit en envoyant des perturbations sinusoïdales via ces commandes de trim CTi de directement modifier les coefficients de l'équation différentielle (2) par insertion d'une nouvelle matrice de raideur Ktp et non pas d'en modifier le deuxième membre (c'est-à-dire les forces d'excitation appliquées comme décrit dans le document cité). A noter qu'avec les peignes de trimming on modifie le résonnateur, tandis qu'avec les commandes d'excitation on vient contraindre son déplacement.

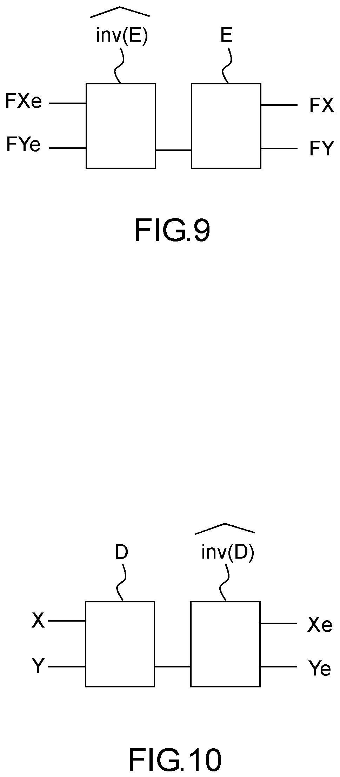

Les matrices estimées $\widehat{inv(E)}$ et $\widehat{inv(D)}$ déterminées par le procédé selon l'invention ne sont pas parfaites, tel qu'illustré figure 9 pour l'excitation et figure 10 pour la détection, c'est à dire qu'elles ne sont pas strictement égales respectivement à l'inverse de la matrice E et à l'inverse de la matrice D : les produits D. $\widehat{inv(D)}$ et $\widehat{inv(E)}$ .E ne sont pas égaux à la matrice identité, tout en s'en rapprochant.

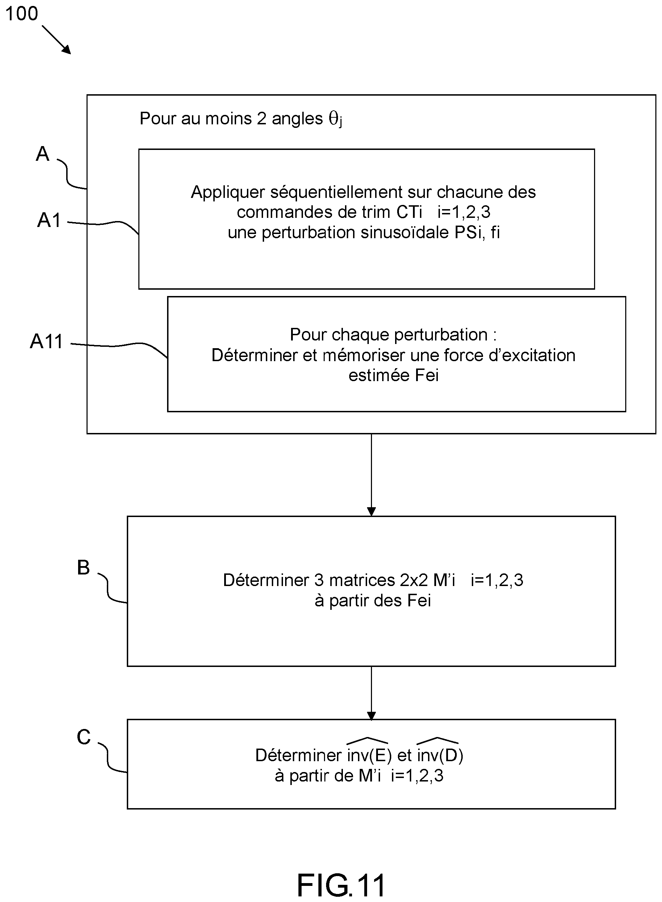

Le procédé 100 selon l'invention, tel qu'illustré figure 11 comprend une première étape **A** consistant à, pour au moins deux angles électrique θj de l'onde de vibration, réaliser une sous étape **A1** consistant à appliquer séquentiellement, via chacune des trois commandes de trim CTi, une perturbation sinusoïdale de raideur PSi de fréquence de perturbation fi.

Pour cela on applique une tension électrique sinusoïdale de fréquence fi à la commande CTi.

Pour chaque perturbation appliquée PSi on détermine et mémorise dans la sous étape **A11** une force d'excitation estimée Fei, à appliquer au résonateur en présence de ladite perturbation PSi pour maintenir la vibration linéaire, à partir des commandes d'excitation déterminées par les asservissements. On change les caractéristiques du résonateur en les rendant sinusoïdales et on regarde les forces qu'il faut appliquer pour avoir une onde linéaire.

Une perturbation sinusoïdale de raideur PS1 appliquée via la commande CT1, produit une variation de raideur sinusoïdale de Kx correspondant à une matrice de raideur Ktp1 :

$$Ktp1 = \begin{bmatrix} A1\cos(2\pi f1t) & 0 \\ 0 & 0 \end{bmatrix}$$

Une perturbation sinusoïdale de raideur PS2 appliquée via la commande CT2, produit une variation de raideur sinusoïdale de Ky correspondant à une matrice de raideur Ktp2 :

$$Ktp2 = \begin{bmatrix} 0 & 0 \\ 0 & A2\cos(2\pi f2t) \end{bmatrix}$$

Une perturbation sinusoïdale de raideur PS3 appliquée via la commande CT3, produit une variation de raideur sinusoïdale de Kxy correspondant à une matrice de raideur Ktp3 :

$$Ktp3 = \begin{bmatrix} 0 & A3\cos(2\pi f3t) \\ A3\cos(2\pi f3t) & 0 \end{bmatrix}$$

Puis lors d'une étape **B** on détermine, à partir des trois forces d'excitation estimée Fei *i=1,2,3* mémorisées à l'étape **A11,** fonction des angles électriques θj et des perturbations appliquées PSi, trois matrices 2x2 M'i représentatives de la réponse du gyromètre à la perturbation PSi. Un mode préféré de calcul des matrices M'i est décrit plus loin.

Enfin dans une étape C on détermine et mémorise une matrice d'excitation inverse estimée $\widehat{inv(E)}$ et une matrice de détection inverse estimée $\widehat{inv(D)}$ à partir des trois matrices M'i déterminées à l'étape **B.** une matrice d'excitation E et une matrice de détection D étant respectivement représentative de l'effet de la chaine d'excitation et de l'effet de la chaine de détection du capteur.

Une fois ces matrices estimées déterminées et mémorisées elles sont destinées à être mise en œuvre lors du fonctionnement du capteur, c'est-à-dire lorsque celui-ci réalise une mesure : $\widehat{inv(E)}$ est destinée à être appliquée aux forces d'excitation déterminées par les asservissements, préalablement à l'envoi sur les transducteurs d'excitation, de manière à pré-compenser ces forces d'excitation ; $\widehat{inv(D)}$ est destinée à être appliquée aux valeurs de mouvement détectées, de manière à corriger ces valeurs. On minimise ainsi les erreurs d'excitation et de détection de la mesure en appliquant les matrices inverses estimées.

En d'autres termes l'intérêt de la méthode selon l'invention est de remonter aux défauts de détection et d'excitation « facilement » par un calcul, en exploitant un actionneur supplémentaire, celui de trimming inclut dans certains gyromètres MEMS, qui donne de l'observabilité supplémentaire.

En pratique, selon un mode de réalisation la méthode selon l'invention est itérative, ce qui permet d'améliorer sa précision. Typiquement il n'y a pas plus de deux itérations.

Lorsque l'on applique une matrice Ktpi perturbatrice tel que décrite plus haut sur un transducteur TQ ou TF l'équation (2) devient, pour une première variante selon laquelle on applique uniquement les perturbations PSi et pas les commandes de trim classiques (les asservissements de trim sont ici coupés).

$$M\begin{bmatrix}\ddot{X}\\\ddot{Y}\end{bmatrix} + A\begin{bmatrix}\dot{X}\\\dot{Y}\end{bmatrix} + K\begin{bmatrix}X\\Y\end{bmatrix} + C\begin{bmatrix}\dot{X}\\\dot{Y}\end{bmatrix} - Ktpi\begin{bmatrix}X\\Y\end{bmatrix} = \begin{bmatrix}FXc\\FYc\end{bmatrix} + \begin{bmatrix}FXpi\\FYpi\end{bmatrix} \qquad (5)$$

Pour simplifier on dénomme Fi s'exprimant en deux composantes (FX, FY) la force d'excitation appliquée. Fi se décompose en une force d'excitation standard Fc (FXc, FYc) pour réaliser l'asservissement courant du capteur en l'absence de perturbation, et une force d'excitation de compensation Fpi (FXpi, FYpi) pour compenser l'application de la perturbation PSi:

On constate que l'application d'une perturbation induit une modification de certains coefficients dans l'équation différentielle (5) par rapport à l'équation classique (2) :

$$\text{Fi= Fc+Fpi ; FXi = FXc+FXpi ; FYi = FYc+ FYpi}$$

$$\begin{bmatrix}FXi\\FYi\end{bmatrix} = \begin{bmatrix}FXc\\FYc\end{bmatrix} + \begin{bmatrix}FXpi\\FYpi\end{bmatrix}$$

L'amplitude des perturbations appliquées PSi est choisie pour que les amplitudes de (FXpi, FYpi) soit au moins 10 fois plus fortes que les amplitudes de (FXc, FYc). Ce choix est fait pour que les phénomènes à observer sortent bien du bruit et soient plus facilement observables. Cependant on ne peut pas trop augmenter l'amplitude non plus car pratiquement les commandes ne permettent pas de le faire.

La force Fc s'occupe de contrôler de manière classique le résonateur pour que l'onde soit par exemple linéaire et d'amplitude donnée, et on a (de manière similaire à l'équation (1) :

$$M\begin{bmatrix}\ddot{X}\\\ddot{Y}\end{bmatrix} + A\begin{bmatrix}\dot{X}\\\dot{Y}\end{bmatrix} + K\begin{bmatrix}X\\Y\end{bmatrix} + C\begin{bmatrix}\dot{X}\\\dot{Y}\end{bmatrix} = \begin{bmatrix}FXc\\FYc\end{bmatrix} \quad (6)$$

Du fait de la différence de fréquence entre Fc et Fp et du fait de la linéarité du système on peut isoler :

$$-Ktpi\begin{bmatrix}X\\Y\end{bmatrix} = \begin{bmatrix}FXpi\\FYpi\end{bmatrix} \quad (7)$$

Selon une deuxième variante on applique les perturbations PSi en superposition des commandes de trim (matrice Kt) classiques (les asservissements de trim sont alors en fonctionnement. L'équation (2) devient alors :

$$M\begin{bmatrix}\ddot{X}\\\ddot{Y}\end{bmatrix} + A\begin{bmatrix}\dot{X}\\\dot{Y}\end{bmatrix} + K\begin{bmatrix}X\\Y\end{bmatrix} + C\begin{bmatrix}\dot{X}\\\dot{Y}\end{bmatrix} - Kt\begin{bmatrix}X\\Y\end{bmatrix} - Ktpi\begin{bmatrix}X\\Y\end{bmatrix} = \begin{bmatrix}FXc\\FYc\end{bmatrix} + \begin{bmatrix}FXpi\\FYpi\end{bmatrix} \quad (5')$$

De la même manière l'asservissement classique du résonateur s'exprime :

$$M \begin{bmatrix} \ddot{X} \\ \ddot{Y} \end{bmatrix} + A \begin{bmatrix} \dot{X} \\ \dot{Y} \end{bmatrix} + K \begin{bmatrix} X \\ Y \end{bmatrix} + C \begin{bmatrix} \dot{X} \\ \dot{Y} \end{bmatrix} - Kt \begin{bmatrix} X \\ Y \end{bmatrix} = \begin{bmatrix} FXc \\ FYc \end{bmatrix} \quad (6')$$

et la formule (7) reste vérifiée.

A partir de la formule (7), et de (3) et (4) on introduit les matrices d'excitation et de détection E et D (également dénommées matrice d'erreur d'excitation et de détection) :

$$inv(D) \begin{bmatrix} \ddot{X}e \\ \ddot{Y}e \end{bmatrix} + Ainv(D) \begin{bmatrix} \dot{X}e \\ \dot{Y}e \end{bmatrix} + Kinv(D) \begin{bmatrix} Xe \\ Ye \end{bmatrix} + Cinv(D) \begin{bmatrix} \dot{X}e \\ \dot{Y}e \end{bmatrix} -$$

$$Ktpi.inv(D) \begin{bmatrix} Xe \\ Ye \end{bmatrix} = E \begin{bmatrix} FXec \\ FYec \end{bmatrix} + E \begin{bmatrix} FXepi \\ FYepi \end{bmatrix} \quad (8)$$

Avec Fe (FXe,FYe) force estimée pour contrôler l'oscillateur, qui se décompose en une force Fec (FXec, FYec) et une force Fepi (FXepi, FYepi) selon la même logique que précédemment :

Fec force d'excitation standard estimée pour réaliser l'asservissement classique du capteur en l'absence de perturbation,

Fepi force d'excitation de compensation estimée pour compenser l'application de la perturbation.

$$\begin{bmatrix} FXei \\ FYei \end{bmatrix} = \begin{bmatrix} FXec \\ FYec \end{bmatrix} + \begin{bmatrix} FXepi \\ FYepi \end{bmatrix}$$

Soit FXei=FXec+FXepi et FYei=FYec+FYepi

Les forces réellement appliquées valent :

$$\begin{bmatrix} FXi \\ FYi \end{bmatrix} = \begin{bmatrix} FXc \\ FYc \end{bmatrix} + \begin{bmatrix} FXpi \\ FYpi \end{bmatrix} = E \begin{bmatrix} FXei \\ FYei \end{bmatrix} = E \left( \begin{bmatrix} FXec \\ FYec \end{bmatrix} + \begin{bmatrix} FXepi \\ FYepi \end{bmatrix} \right)$$

A partir de Fei $\begin{bmatrix} FXei \\ FYei \end{bmatrix}$ on va extraire les amplitudes de $\begin{bmatrix} FXepi \\ FYepi \end{bmatrix}$.

*FXec* et FYec sont des fonctions sinusoïdales de fréquence ω.

*FXepi* et *FYepi* sont des fonctions sinusoïdales en ω modulées par les perturbations introduites dans Ktpi, soit à la fréquence fi.

Théoriquement on a :

$$-Ktpi.inv(D) \begin{bmatrix} Xe \\ Ye \end{bmatrix} = E \begin{bmatrix} FXepi \\ FYepi \end{bmatrix} \text{ car } E \begin{bmatrix} FXepi \\ FYepi \end{bmatrix} \text{ est la force qui vient contrer la perturbation par définition.}$$

Pour chaque peigne de trimming et donc chaque perturbation appliquée PSi, et pour un angle θ de vibration de l'onde, on a théoriquement :

$$inv(E) \begin{bmatrix} A1\cos(2\pi f1t) & 0 \\ 0 & 0 \end{bmatrix} inv(D) \begin{bmatrix} X0\cos(\theta)\cos(\omega t) \\ X0\sin(\theta)\cos(\omega t) \end{bmatrix} = \begin{bmatrix} FXep1(\theta) \\ FYep1(\theta) \end{bmatrix} \quad (9)$$

$$inv(E) \begin{bmatrix} 0 & 0 \\ 0 & A2\cos(2\pi f1t) \end{bmatrix} inv(D) \begin{bmatrix} X0\cos(\theta)\cos(\omega t) \\ X0\sin(\theta)\cos(\omega t) \end{bmatrix} = \begin{bmatrix} FXep2(\theta) \\ FYep2(\theta) \end{bmatrix} \quad (10)$$

$$inv(E) \begin{bmatrix} 0 & A3\cos(2\pi f1t) \\ A3\cos(2\pi f1t) & 0 \end{bmatrix} inv(D) \begin{bmatrix} X0\cos(\theta)\cos(\omega t) \\ X0\sin(\theta)\cos(\omega t) \end{bmatrix} = \begin{bmatrix} FXep3(\theta) \\ FYep3(\theta) \end{bmatrix} \quad (11)$$

Où :

- X0 est l'amplitude de la vibration contrôlée par asservissement connue
- $\omega$ est la pulsation du résonateur connue
- Ai sont les amplitudes des perturbations PSi connues
- fi sont les fréquences des perturbations PSi connues
- $\theta$ est l'angle auquel on asservit le gyromètre connu

Les calculs sont menés pour i=1 et le raisonnement est le même pour i=2 et 3.

Les amplitudes des termes à droite et à gauche de l'équation (9) sont les mêmes donc on a théoriquement :

$$A1.\,inv(E)\begin{bmatrix}1 & 0\\0 & 0\end{bmatrix}inv(D)\begin{bmatrix}X0\cos(\theta)\\X0\sin(\theta)\end{bmatrix} = \begin{bmatrix}AFXep1(\theta)\\AFYep1(\theta)\end{bmatrix} \qquad (12)$$

où $AFXep1(\theta)$ désigne l'amplitude de $FXep1(\theta)$.

On veut déterminer $\begin{bmatrix}AFXep1(\theta)\\AFYep1(\theta)\end{bmatrix}$ pour en déduire la matrice M'1 définie par :

$$M'1 = inv(E)\begin{bmatrix}1 & 0\\0 & 0\end{bmatrix}inv(D) = inv(E).M1.inv(D) \qquad (13)$$

avec $M1 = \begin{bmatrix}1 & 0\\0 & 0\end{bmatrix}$

On a accès aux forces Fei (FXei, FYei) qui ont été mémorisée à l'étape A11 soit ici :

$$\begin{bmatrix}FXe1(\theta)\\FYe1(\theta)\end{bmatrix} = \begin{bmatrix}FXec(\theta)\\FYec(\theta)\end{bmatrix} + \begin{bmatrix}FXep1(\theta)\\FYep1(\theta)\end{bmatrix}$$

$\begin{bmatrix}FXec(\theta)\\FYec(\theta)\end{bmatrix}$ sont des sinusoides à la pulsation du résonateur $\omega$, $\begin{bmatrix}FXep1(\theta)\\FYep1(\theta)\end{bmatrix}$ sont des sinusoides à la pulsation du résonateur $\omega$ modulées par une fonction sinusoïdale à la pulsation $2\pi f1$.

On démodule en $\omega$ puis en $2\pi f1$ pour remonter aux amplitudes de $\begin{bmatrix}FXep1(\theta)\\FYep1(\theta)\end{bmatrix}$ , ce qui fournit $\begin{bmatrix}AFXep1(\theta)\\AFYep1(\theta)\end{bmatrix}$ (la démodulation est une opération très connue par l'homme de l'art dans différents domaines).

Ainsi selon un mode de réalisation de l'invention l'étape B comprend :

- une sous étape **B1** consistant à démoduler chaque force d'excitation estimée Fei par la fréquence de vibration $\omega$ puis par la fréquence de perturbation associée fi, pour obtenir une amplitude AFpei (AFXepi, AFYepi) de force d'excitation de compensation de la perturbation Fepi (FXepi, FYepi).
- une sous étape **B2** consistant à déterminer la matrice M'i à partir de l'amplitude de la force Fepi déterminée en **B1.**

Selon un mode de réalisation de l'invention chaque matrice M'i représentative de la réponse du gyromètre à la perturbation M'i déterminée à l'étape **B** est de la forme :

$$\text{M'i} = \widehat{inv(E)}.\text{Mi}.\,\widehat{inv(D)}$$

Avec Mi i=1, 2 3 définies par : $M1 = \begin{bmatrix}1 & 0\\0 & 0\end{bmatrix}$ ; $M2 = \begin{bmatrix}0 & 0\\0 & 1\end{bmatrix}$ ; et $M3 = \begin{bmatrix}0 & 1\\1 & 0\end{bmatrix}$

Nous allons expliquer à présent comment on détermine M'i à partir de AFpei.

On part de l'équation (12) :

$$A1. inv(E) \begin{bmatrix} 1 & 0 \\ 0 & 0 \end{bmatrix} inv(D) \begin{bmatrix} X0 \cos(\theta) \\ X0 \sin(\theta) \end{bmatrix} = \begin{bmatrix} AFXep1(\theta) \\ AFYep1(\theta) \end{bmatrix}$$

qui peut se mettre sous la forme :

$$M'1. \begin{bmatrix} A1. X0 \cos(\theta) \\ A1. X0 \sin(\theta) \end{bmatrix} = \begin{bmatrix} AFXep1(\theta) \\ AFYep1(\theta) \end{bmatrix} \quad (14)$$

A1, X0, θ, *AFXep*1(θ) et *AFYep*1(θ) sont connues.

M'1 a 4 inconnues (4 coefficients). Il faut donc au moins deux angles pour accéder à aux quatre coefficients de M'1.

Dans les faits on le fait pour plus de deux angles et on réalise un filtrage statistique, typiquement de type moindre carré, pour estimer au mieux les coefficients de M'1. Ainsi selon un mode de réalisation l'étape **A** est mise en œuvre avec une pluralité d'angles électriques, les matrices M'i étant alors déterminées à l'étape **B** par un filtrage statistique (du type moindre carré par exemple) minimisant la contribution du bruit du capteur.

Ainsi à partir de l'équation (14) et des différentes grandeurs connues on a accès à M'1 estimée de $inv(E) \begin{bmatrix} 1 & 0 \\ 0 & 0 \end{bmatrix} inv(D)$ soit :

$$M'1 = \widehat{inv(E)} \begin{bmatrix} 1 & 0 \\ 0 & 0 \end{bmatrix} \widehat{inv(D)} \quad (15)$$

On fait de même pour M'2 et M'3.

$$M'2 = \widehat{inv(E)} \begin{bmatrix} 0 & 0 \\ 0 & 1 \end{bmatrix} \widehat{inv(D)} \quad (16)$$

$$M'3 = \widehat{inv(E)} \begin{bmatrix} 0 & 1 \\ 1 & 0 \end{bmatrix} \widehat{inv(D)} \quad (17)$$

On va à présent montrer que l'on remonte à $\widehat{inv(E)}$ et $\widehat{inv(D)}$ à partir des matrices M'i déterminées à l'étape B (avec l'équation (14) et ses équivalents pour i=2 et 3) grâce aux équations (15) à (17).

Il s'agit d'un problème non linéaire, mais $\widehat{inv(E)}$ et $\widehat{inv(D)}$ sont des matrices proches de l'identité car les erreurs électroniques sont faibles.

On peut donc les décomposer ainsi :

$$\widehat{inv(E)} = \begin{bmatrix} 1 + e11 & e12 \\ e21 & 1 + e22 \end{bmatrix} = I + A \quad (18)$$

$$\widehat{inv(D)} = \begin{bmatrix} 1 + d11 & d12 \\ d21 & 1 + d22 \end{bmatrix} = I + B \quad (19)$$

Où I désigne l'identité et eij, dij sont des valeurs faibles (typiquement inférieures à 0.01)

Donc :

$$\widehat{inv(E)}. Mi. \widehat{inv(D)} = AMi + MiB$$

en négligeant les ordres 2.

A partir de AMi+MiB = M'i connue on va remonter à A et B.

Avec M1 :

$$AM1 + M1B = \begin{bmatrix} e11 & e12 \\ e21 & e22 \end{bmatrix}\begin{bmatrix} 1 & 0 \\ 0 & 0 \end{bmatrix} + \begin{bmatrix} 1 & 0 \\ 0 & 0 \end{bmatrix}\begin{bmatrix} d11 & d12 \\ d21 & d22 \end{bmatrix} = \begin{bmatrix} e11 + d11 & d12 \\ e21 & 0 \end{bmatrix} \quad (20)$$

On identifie donc d12 et e21, ainsi que e11+d11

Avec M2 :

$$AM2 + M2B = \begin{bmatrix} e11 & e12 \\ e21 & e22 \end{bmatrix}\begin{bmatrix} 0 & 0 \\ 0 & 1 \end{bmatrix} + \begin{bmatrix} 0 & 0 \\ 0 & 1 \end{bmatrix}\begin{bmatrix} d11 & d12 \\ d21 & d22 \end{bmatrix} = \begin{bmatrix} 0 & e12 \\ d21 & e22 + d22 \end{bmatrix} \quad (21)$$

On obtient d21, e12 et e22+d22

Avec M3 :

$$AM3 + M3B = \begin{bmatrix} e11 & e12 \\ e21 & e22 \end{bmatrix}\begin{bmatrix} 0 & 1 \\ 1 & 0 \end{bmatrix} + \begin{bmatrix} 0 & 1 \\ 1 & 0 \end{bmatrix}\begin{bmatrix} d11 & d12 \\ d21 & d22 \end{bmatrix} = \begin{bmatrix} e12 + d21 & e11 + d22 \\ e22 + d11 & e21 + d12 \end{bmatrix}$$

On obtient donc $e22 + d11$ et e11+d22, ce qui permet en combinaison avec e11+d11 issu de (20) et e22+d22 issu de (21).

A noter que les équations e22 + d11, e11+d22, e11+d11 et e22+d22 ne sont pas indépendantes, le système est de rang 3 : par exemple (e22+d22)+( e11+d11)-( e11+d22)= $e22 + d11$. On ne peut donc pas déterminer les 4 coefficients à partir des 4 équations. Mais l'équation (8) peut être multipliée à droite et à gauche arbitrairement par n'importe quelle valeur. Par exemple on peut arbitrairement décider de tout diviser par (1+d11), de telle sorte que d11 serait égal à 0 dans ce nouveau système, ce qui supprime cette inconnue et permet de remonter aux inconnues e22 puis d22 puis e11.

Ainsi selon un mode de réalisation du procédé selon l'invention les trois matrices représentatives M'i déterminées à l'étape **B** s'expriment, en négligeant les termes de deuxième ordre, sous la forme M'i = AMi+MiB et l'étape **C** comprend une sous étape consistant à déterminer les matrice A et B (8 coefficients) à partir desdites matrices M'i. Ainsi avec la méthode telle que revendiquée ces 8 coefficients sont tous observables. Les matrices $\widehat{inv(E)}$ et $\widehat{inv(D)}$ sont alors déterminées à partir de A et B (équations (18) et (19)).

En simulant finement le comportement pratique du gyromètre on peut déterminer des coefficients simulés des matrices E et D. Lorsque l'on calcule les grandeurs $\widehat{inv(E)}.E$ et $D.\widehat{inv(D)}$ en utilisant ces coefficient simulés et les valeurs des coefficients de $\widehat{inv(E)}$ et $\widehat{inv(D)}$ déterminés par la méthode selon l'invention, on obtient la matrice identité avec erreur comprise en 10 ppm et 200ppm, ce qui constitue une très bonne précision d'estimation pour $\widehat{inv(E)}.E$ et $D.\widehat{inv(D)}$.

Afin que les raideurs changent suffisamment lentement dans l'équation (8) pour être considérées comme des constantes, les fréquences f1, f2 et f3 des perturbations PS1 PS2 et PS3 sont préférentiellement choisies très inférieures à la fréquence de la vibration $\omega$ , typiquement entre 1000 fois et 100000 fois moins. La fréquence de vibration de l'onde étant typiquement de l'ordre de la dizaine de kHz, les fréquences f1, f2 et f3 sont typiquement inférieures à 10 Hz voir au Hz.

En outre les fréquences f1, f2 et f3 des perturbations PS1 PS2 et PS3 sont préférentiellement choisies supérieures aux fréquences des phénomènes physiques responsables des dérives du capteur, et plus particulièrement des phénomènes physiques liés aux variations de la température du capteur. Ces phénomènes présentent typiquement des fréquences très inférieures au Hz, voir au dixième de Hz.

Ainsi préférentiellement les fréquences f1, f2 et f3 sont supérieures à 0.1 Hz.

Préférentiellement les fréquences f1, f2 et f3 sont injectées séparément, ces fréquences peuvent donc être égales. Mais pour la mise en œuvre de la méthode cela n'a pas d'importance.

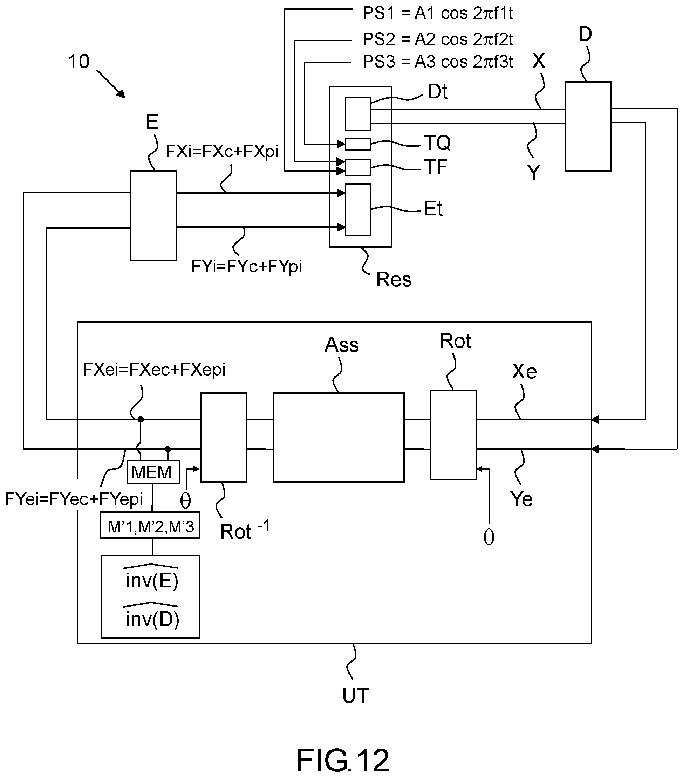

La figure 12 illustre le capteur angulaire inertiel 10 mettant en œuvre le procédé de calibration 100 selon l'invention. Les perturbations PSi sont séquentiellement appliquées aux transducteurs TQ ou TF. L'unité de traitement UT opère un changement de repère sur les mouvements estimés (Xe, Ye) de la vibration résultante puis calcule les commandes d'excitation estimées permettant l'asservissement du capteur (module d'asservissement Ass) en présence de la perturbation. Puis après un retour au repère capteur les forces d'excitation estimées FXei, FYei sont déterminées et mémorisées (MEM). A partir de ces forces l'unité de traitement détermine les coefficients des matrices $\widehat{inv(E)}$ et $\widehat{inv(D)}$ et les mémorise.

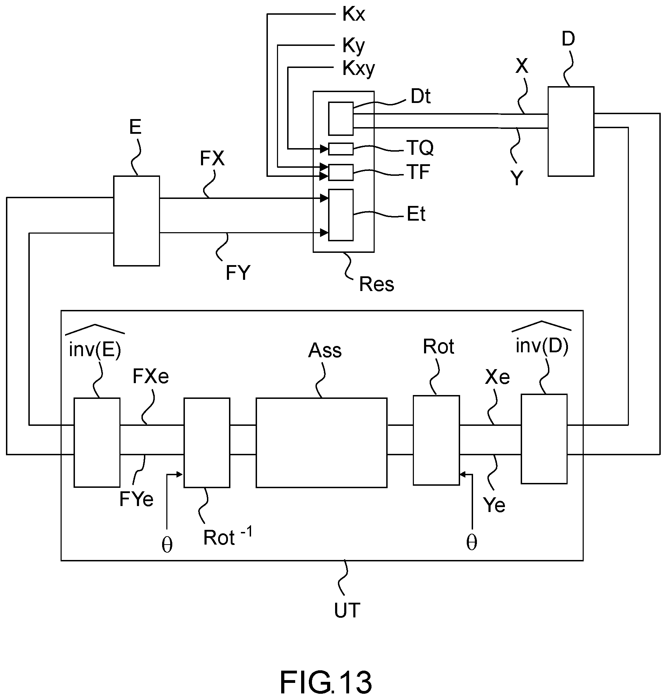

La figure 13 illustre un capteur en fonctionnement c'est à dire en train d'effectuer une mesure de vitesse angulaire, la calibration étant terminée et les matrices $\widehat{inv(E)}$ et $\widehat{inv(D)}$ mémorisées. L'unité de traitement applique $\widehat{inv(D)}$ aux mouvements mesurés par le capteur et $\widehat{inv(E)}$ aux forces d'excitation estimées par les asservissements. Les asservissements de trimming (non représentés) fonctionnent alors de manière classique.

Le procédé de calibration peut être mis en œuvre selon plusieurs modes d'utilisation.

Pour tous les modes, une fois la calibration effectuée et lorsque le capteur est en fonctionnement, la matrice d'excitation inverse estimée $\widehat{inv(E)}$ est appliquée aux forces d'excitation déterminées par les asservissements, préalablement à l'envoi sur les transducteurs d'excitation, de manière à pré-compenser lesdites forces d'excitation, et la matrice de détection inverse estimée $\widehat{inv(D)}$ est appliquée aux valeurs de mouvement détectées de manière à corriger les valeurs de mouvement détectées.

Dans un premier mode d'utilisation une phase de calibration du capteur inertiel mettant en œuvre le procédé 100 selon l'invention est mise en œuvre préalablement à la mise en fonctionnement du capteur, typiquement en sortie de la chaine de fabrication (calibration usine). Les matrices d'excitation et de détection inverses sont mémorisées dans l'unité de traitement. Elles sont ensuite appliquées lorsque le capteur est en fonctionnement et réalise une mesure.

Selon un deuxième mode d'utilisation, l'invention concerne un procédé de mesure d'une vitesse angulaire d'un porteur sur lequel est disposé le capteur inertiel 10 comprenant une phase de calibration mettant en œuvre le procédé de calibration 100 selon l'invention, réalisée à la mise en route du capteur. Une fois la calibration terminée, on réalise dans une étape D une mesure appliquant les matrices $\widehat{inv(E)}$ et $\widehat{inv(D)}$ mémorisées.

Selon un troisième mode d'utilisation, l'invention concerne un procédé de mesure d'une vitesse angulaire d'un porteur sur lequel est disposé le capteur inertiel 10 comprenant une phase de calibration mettant en œuvre le procédé de calibration 100 selon l'invention, réalisée en cours de fonctionnement. En phase de calibration le capteur inertiel ne peut pas réaliser de mesure, et donc la mesure de la vitesse angulaire par le capteur 10 est interrompue pendant la phase de calibration.

Pendant que le capteur 10 est en calibration, le procédé met en œuvre une étape **D'** de mesure de la vitesse angulaire réalisée par un capteur inertiel additionnel également disposé sur le porteur, ceci afin de garantir une continuité de mesure.

Une fois la calibration terminée, le capteur 10 reprend la main sur la mesure en réalisant dans l'étape **D** une mesure appliquant les matrices $\widehat{inv(E)}$ et $\widehat{inv(D)}$ mémorisées.

Le basculement d'un capteur à l'autre s'opère par exemple périodiquement dans le temps, permettant une calibration tout au long de la durée de fonctionnement du capteur 10.

En simulant finement le comportement pratique du gyromètre on peut déterminer des coefficients simulés des matrices E et D.

Lorsque l'on calcule les grandeurs $\widehat{inv(E)}.\mathrm{E}$ et $\mathrm{D}.\widehat{inv(D)}$ en utilisant les valeurs des coefficients de $\widehat{inv(E)}$ et $\widehat{inv(D)}$ déterminés par la méthode selon l'invention, on obtient la matrice identité avec erreur comprise en 10 ppm et 200ppm, ce qui une très bonne précision.

## Revendications

**1.** Procédé de calibration (100) d'un capteur angulaire inertiel (10), le capteur inertiel comprenant :

   - un résonateur (Res) présentant une structure plane et axisymétrique autour de deux axes x et y perpendiculaires entre eux définissant un repère capteur xy et comprenant deux masses mobiles vibrantes (M1, M2) disposées l'une autour de l'autre configurées pour vibrer en opposition de phase à une fréquence de vibration ($\omega$) et selon une direction x' définissant un repère onde x'y', l'onde de vibration (OV) selon x' faisant un angle électrique ($\theta$) par rapport à l'axe x,
   - le résonateur comprenant en outre une pluralité de transducteurs électrostatiques commandés par des tensions électriques et opérant selon les deux axes x et y, dont au moins, sur au moins une des deux masses,
   - une paire de transducteurs de détection (Dt) configurés pour détecter les mouvements de l'onde de vibration selon x et y et une paire de transducteurs d'excitation (Et) auxquels sont appliquées des forces d'excitation respectivement selon x et y, via une pluralité de commandes d'excitation déterminées par des asservissements à partir des mouvements détectés, et pour maintenir l'onde de vibration selon une forme souhaitée et vibrant selon x', et

- une paire de transducteurs de compensation d'un biais en quadrature (TQ), commandés via une commande de quadrature CTxy, et une paire de transducteur d'ajustement de fréquence (TF), commandés via respectivement une commande de fréquence CTx selon x et une commande de fréquence CTy selon y, les trois commandes CTx, CTy et CTxy étant dénommées commandes de trim CTi indicées i avec i=1,2, 3,

le procédé s'appliquant lorsque le capteur est en fonctionnement selon un mode gyromètre, et caractérisé en qu'il comprend les étapes consistant à :

**A** pour au moins deux angles électrique ($\theta$j) de l'onde de vibration :

**A1** appliquer séquentiellement via chacune des trois commandes de trim CTi une perturbation sinusoïdale de raideur PSi présentant une fréquence de perturbation fi, et pour chaque perturbation appliquée:

**A11** déterminer et mémoriser une **force d'excitation estimée Fei** à appliquer au résonateur en présence de ladite perturbation PSi, à partir des commandes d'excitation déterminées par les asservissements

**B** déterminer, à partir desdites trois forces d'excitation estimée Fei i=1,2,3 mémorisées à l'étape **A11,** fonction desdits angles électriques et des perturbations appliquées, trois matrices 2x2 M'i, une matrice M'i étant représentative de la réponse du gyromètre à la perturbation PSi,

**C** déterminer et mémoriser une matrice d'excitation inverse estimée $\widehat{inv(E)}$ et une matrice de détection inverse estimée $\widehat{inv(D)}$ à partir des trois matrices M'i déterminées à l'étape **B,** une matrice d'excitation E et une matrice de détection D étant respectivement représentative des effets de la chaine d'excitation et de l'effet de la chaine de détection du capteur.

2. Procédé selon la revendication 1 dans lequel chaque force d'excitation estimée Fei se décompose en une force d'excitation standard estimée Fec correspondant à un asservissement standard du capteur et une force d'excitation de compensation de la perturbation estimée Fepi,

et dans lequel l'étape **B** comprend les sous étapes consistant à :

- **B1** démoduler chaque force d'excitation estimée Fei par la fréquence de vibration ($\omega$) puis par la fréquence de perturbation associée fi pour obtenir une amplitude (AFpei) de ladite force d'excitation de compensation de la perturbation Fepi,

- **B2** déterminer ladite matrice M'i à partir de ladite amplitude de ladite force Fepi.

3. Procédé selon l'une des revendications précédentes dans lequel l'étape **A** est mise en oeuvre avec une pluralité d'angles électriques, lesdites matrices M'i étant alors déterminées à l'étape **B** par un filtrage statistique minimisant la contribution du bruit du capteur.

4. Procédé selon l'une des revendications précédentes dans lequel chaque matrice représentative M'i déterminée à l'étape **B** est de la forme :

$$M'i = \widehat{inv(E)}.Mi. \widehat{inv(D)}$$

Mi défini par : $M1 = \begin{bmatrix} 1 & 0 \\ 0 & 0 \end{bmatrix}$ ; $M2 = \begin{bmatrix} 0 & 0 \\ 0 & 1 \end{bmatrix}$ ; et $M3 = \begin{bmatrix} 0 & 1 \\ 1 & 0 \end{bmatrix}$

5. Procédé selon la revendication précédente dans lequel on considère les matrices $\widehat{inv(E)}$ et $\widehat{inv(D)}$ proches de matrices unitaires et s'exprimant :

$$\widehat{inv(E)} = 1+A$$

$$\widehat{inv(D)} = 1+B$$

les trois matrices représentatives M'i déterminées à l'étape **B** s'exprimant alors, en négligeant les terme de deuxième ordre :

$$M'i = AMi+MiB$$

et dans lequel l'étape **C** comprend une sous étape consistant à déterminer lesdites matrice A et B à partir desdites matrices M'i.

6. Procédé selon l'une des revendications précédentes dans lequel lesdites fréquences de perturbation fi i=1,2,3 sont comprises entre 1000 fois moins et 100000 fois moins que la fréquence de vibration de l'onde ($\omega$).

7. Procédé selon l'une des revendications précédentes dans lequel lesdites fréquences fi sont inférieures à 10Hz.

8. Procédé selon l'une des revendications précédentes dans lequel chaque perturbation PSi présente une amplitude identique pour tous les angles électriques.

9. Procédé selon l'une des revendications précédentes dans lequel chaque force d'excitation estimée Fei se décompose en une force d'excitation standard estimée Fec correspondant à un asservissement standard du capteur et une force d'excitation de compensation de la perturbation estimée Fepi, et dans lequel une amplitude de la perturbation est choisie de sorte que une amplitude de la force Fepi soit au moins 10 fois plus forte qu'une amplitude de la force Fec.

10. Procédé de mesure d'une vitesse angulaire d'un porteur sur lequel est disposé ledit capteur inertiel (10), comprenant :

    - une phase de calibration dudit capteur inertiel mettant en œuvre le procédé de calibration (100) selon l'une des revendications 1 à 9, réalisée à la mise en route du capteur inertiel,

    - une étape **D** de fonctionnement dudit capteur inertiel dans laquelle lesdites matrices $\widehat{inv(E)}$ et $\widehat{inv(D)}$ mémorisées sont appliquées, ladite matrice d'excitation inverse estimée $\widehat{inv(E)}$ étant appliquée aux forces d'excitation déterminées par lesdits asservissements, préalablement à l'envoi sur les transducteurs d'excitation, de manière à pré-compenser lesdites forces d'excitation, et ladite matrice de détection inverse estimée $\widehat{inv(D)}$ étant appliquée aux valeurs de mouvement détectées de manière à corriger lesdites valeurs de mouvement détectées.

11. Procédé de mesure d'une vitesse angulaire d'un porteur sur lequel est disposé ledit capteur inertiel (10), comprenant :

    - une phase de calibration dudit capteur inertiel mettant en œuvre le procédé de calibration (100) selon l'une des revendications 1 à 9, réalisée lorsque le capteur est en cours de fonctionnement, la mesure de la vitesse angulaire étant alors interrompue,
    - une étape **D'** de mesure de la vitesse angulaire, mise en œuvre pendant la phase de calibration, réalisée par un capteur inertiel additionnel également disposé sur le porteur,

    - une étape **D** de fonctionnement dudit capteur inertiel dans laquelle lesdites matrices $\widehat{inv(E)}$ et $\widehat{inv(D)}$ mémorisées sont appliquées, ladite matrice d'excitation inverse estimée $\widehat{inv(E)}$ étant appliquée aux forces d'excitation déterminées par lesdits asservissements, préalablement à l'envoi sur les transducteurs d'excitation, de manière à pré-compenser lesdites forces d'excitation, et ladite matrice de détection inverse estimée $\widehat{inv(D)}$ étant appliquée aux valeurs de mouvement détectées de manière à corriger lesdites valeurs de mouvement détectées.

12. Capteur angulaire inertiel (10) comprenant :

    - un résonateur (Res) présentant une structure plane et axisymétrique autour de deux axes x et y perpendiculaires entre eux définissant un repère capteur xy et comprenant deux masses mobiles vibrantes (M1, M2) disposées l'une autour de l'autre configurées pour vibrer en opposition de phase à une fréquence de vibration ($\omega$) et selon une direction x' définissant un repère onde x'y', l'onde de vibration (OV) selon x' faisant un angle électrique ($\theta$) par rapport à l'axe x,
    - le résonateur comprenant en outre une pluralité de transducteurs électrostatiques commandés par des tensions électriques et opérant selon les deux axes x et y, dont au moins, sur au moins une des deux masses :

- une paire de transducteurs d'excitation (Et) auxquels sont appliquées des forces d'excitation respectivement selon x et y, via une pluralité de commandes d'excitation, pour maintenir l'onde de vibration selon une forme souhaitée et vibrant selon x', et une paire de transducteurs de détection (Dt) configurés pour détecter les mouvements de l'onde de vibration selon x et y,

- une paire de transducteurs de compensation d'un biais en quadrature (TQ), commandés via une commande de quadrature CTxy, et une paire de transducteur d'ajustement de fréquence (TF), commandés via respectivement une commande de fréquence CTx selon x et une commande de fréquence CTy selon y, les trois commandes CTx, CTy et CTxy étant dénommées commandes de trim indicées CTi avec i=1,2, 3,

lesdites commandes d'excitation étant déterminées par des asservissements à partir des mouvements détectés, le capteur étant en fonctionnement selon un mode gyromètre,

**caractérisé en ce que** les trois commandes de trim CTi sont configurées pour appliquer séquentiellement une perturbation sinusoïdale de raideur PSi présentant une fréquence de perturbation fi, pour au moins deux angles électrique ($\theta$j) de l'onde de vibration, et **en ce qu'**il comprend une unité de traitement (UT) configurée pour :

- déterminer et mémoriser, pour chaque perturbation appliquée, une force d'excitation estimée Fei à appliquer au résonateur en présence de ladite perturbation PSi, à partir des commandes d'excitation déterminées par les asservissements,

- déterminer, à partir desdites trois forces d'excitation estimée Fei i=1,2,3 mémorisées à l'étape précédente, fonction desdits angles électriques et des perturbations appliquées, trois matrices 2x2 M'i, une matrice M'i étant représentative de la réponse du gyromètre à la perturbation PSi,

- déterminer et mémoriser une matrice d'excitation inverse estimée $\widehat{inv(E)}$ et une matrice de détection inverse estimée $\widehat{inv(D)}$ à partir des trois matrices M'i déterminées à l'étape précédente, une matrice d'excitation E et une matrice de détection D étant respectivement représentative des effets de la chaine d'excitation et de l'effet de la chaine de détection du capteur,

ladite matrice d'excitation inverse estimée $\widehat{inv(E)}$ étant destinée à être appliquée aux forces d'excitation déterminées par lesdits asservissements, préalablement à l'envoi sur les transducteurs d'excitation, de manière à pré-compenser lesdites forces d'excitation, et ladite matrice de détection inverse estimée $\widehat{inv(D)}$ étant destinée à être appliquée aux valeurs de mouvement détectées de manière à corriger lesdites valeurs de mouvement détectées, lorsque le capteur est en fonctionnement.

**Patentansprüche**

1. Verfahren zum Kalibrieren (100) eines Inertialwinkelsensors (10), wobei der Inertialsensor umfasst:

- einen Resonator (Res), der eine ebene und achsensymmetrische Struktur um zwei zueinander senkrechte Achsen x und y aufweist, die ein Sensorkoordinatensystem xy definieren, und zwei bewegliche Schwingungsmassen (M1, M2) umfasst, die umeinander herum angeordnet sind und konfiguriert sind, um in Gegenphase mit einer Schwingungsfrequenz ($\omega$) und in einer Richtung x' zu schwingen, die ein Wellenkoordinatensystem x'y' definiert, wobei die Schwingungswelle (OV) entlang x' einen elektrischen Winkel ($\theta$) in Bezug auf die x-Achse bildet,

- wobei der Resonator weiter eine Vielzahl von elektrostatischen Wandlern umfasst, die durch elektrische Spannungen angesteuert werden und entlang der zwei Achsen x und y arbeiten, von denen mindestens einer auf mindestens einer der zwei Massen,

- ein Paar Detektionswandler (Dt), die konfiguriert sind, um die Bewegungen der Schwingungswelle gemäß x und y zu erkennen, und ein Paar Anregungswandler (Et), an die entlang x bzw. y Anregungskräfte angelegt werden, über eine Vielzahl von Anregungssteuerungen, die durch Servosteuerungen anhand der erkannten Bewegungen bestimmt werden, und um die Schwingungswelle in einer gewünschten Form und schwingend entlang x' zu halten, und

- ein Paar Quadratur-Bias-Kompensationswandler (TQ), die über eine Quadratursteuerung CTxy angesteuert werden, und ein Paar Frequenzeinstellwandler (TF), die jeweils über eine Frequenzsteuerung CTx gemäß x und eine Frequenzsteuerung CTy gemäß y angesteuert werden, wobei die drei Steuerungen CTx, CTy und CTxy als Trimmsteuerungen CTi indiziert mit i, wobei i=1,2, 3, bezeichnet werden,

wobei das Verfahren angewendet wird, wenn der Sensor im Gyrometer-Modus arbeitet, und **dadurch gekennzeichnet ist, dass** es die folgenden Schritte umfasst:

**A** für mindestens zwei elektrische Winkel ($\theta$j) der Schwingungswelle:
**A1** sequenzielles Anlegen einer sinusförmigen Störung mit einer Steifigkeit PSi, die eine Störfrequenz fi aufweist, über jede der drei Trimmsteuerungen CTi, und für jede angelegte Störung:
**A11** Bestimmen und Speichern einer **geschätzten Anregungskraft Fei,** die bei Anwesenheit der Störung PSi auf den Resonator angelegt werden soll, anhand der durch die Servosteuerungen bestimmten Anregungssteuerungen
**B** Bestimmen, anhand der drei in Schritt **A11** gespeicherten geschätzten Anregungskräfte Fei i=1,2,3, in Abhängigkeit von den elektrischen Winkeln und den angelegten Störungen, von drei Matrizen 2×2 M'i, wobei eine Matrix M'i die Antwort des Gyrometers auf die Störung PSi darstellt,

**C** Bestimmen und Speichern einer geschätzten inversen Anregungsmatrix $\widehat{inv(E)}$ und einer geschätzten inversen Detektionsmatrix $\widehat{inv(D)}$ anhand der drei in Schritt **B** bestimmten Matrizen M'i, wobei eine Anregungsmatrix E und eine Detektionsmatrix D jeweils die Auswirkungen der Anregungskette und die Wirkung der Detektionskette des Sensors darstellen.

2. Verfahren nach Anspruch 1, wobei jede geschätzte Anregungskraft Fei in eine geschätzte Standardanregungskraft Fec, die einer Standardservosteuerung des Sensors entspricht, und eine Kompensationsanregungskraft der geschätzten Störung Fepi zerlegt wird,
und wobei Schritt B die folgenden Teilschritte umfasst:

- **B1** Demodulieren jeder geschätzten Anregungskraft Fei durch die Schwingungsfrequenz ($\omega$) und anschließend durch die zugeordnete Störfrequenz fi, um eine Amplitude (AFpei) der Kompensationsanregungskraft der Störung Fepi zu erhalten,
- **B2** Bestimmen der Matrix M'i anhand der Amplitude der Kraft Fepi.

3. Verfahren nach einem der vorstehenden Ansprüche, wobei Schritt A mit einer Vielzahl von elektrischen Winkeln durchgeführt wird, wobei die Matrizen M'i dann in Schritt **B** durch eine statistische Filterung bestimmt werden, die den Beitrag des Rauschens des Sensors minimiert.

4. Verfahren nach einem der vorstehenden Ansprüche, wobei jede in Schritt **B** bestimmte repräsentative Matrix M'i die folgende Form aufweist:

$$\text{M'i} = \widehat{inv(E)} . \text{Mi} . \widehat{inv(d)}$$

wobei Mi definiert wird durch: $M1 = \begin{bmatrix} 1 & 0 \\ 0 & 0 \end{bmatrix}; M2 = \begin{bmatrix} 0 & 0 \\ 0 & 1 \end{bmatrix};$ und $M3 = \begin{bmatrix} 0 & 1 \\ 1 & 0 \end{bmatrix}$

5. Verfahren nach dem vorstehenden Anspruch, wobei die Matrizen $\widehat{inv(E)}$ und $\widehat{inv(D)}$ als nahe an Einheitsmatrizen liegend betrachtet werden und sich wie folgt ausdrücken:

$$\widehat{inv(E)} = 1 + A$$

$$\widehat{inv(D)} = 1 + B$$

wobei sich die drei repräsentativen Matrizen M'i, die in Schritt B bestimmt wurden, unter Vernachlässigung der Terme zweiter Ordnung wie folgt ausdrücken:

$$\text{M'i} = \text{AMi} + \text{MiB}$$

und wobei Schritt C einen Teilschritt umfasst, der darin besteht, die Matrizen A und B anhand der Matrizen M'i zu bestimmen.

6. Verfahren nach einem der vorstehenden Ansprüche, wobei die Störfrequenzen fi i=1,2,3 zwischen 1000-mal weniger und 100000-mal weniger als die Schwingungsfrequenz der Welle ($\omega$) betragen.

7. Verfahren nach einem der vorstehenden Ansprüche, wobei die Frequenzen fi kleiner als 10Hz sind.

8. Verfahren nach einem der vorstehenden Ansprüche, wobei jede Störung PSi für alle elektrischen Winkel eine identische Amplitude aufweist.

9. Verfahren nach einem der vorstehenden Ansprüche, wobei jede geschätzte Anregungskraft Fei in eine geschätzte Standardanregungskraft Fec, die einer Standardservosteuerung des Sensors entspricht, und eine Kompensationsanregungskraft der geschätzten Störung Fepi zerlegt wird, und wobei eine Störungsamplitude so gewählt wird, dass eine Amplitude der Kraft Fepi mindestens zehnmal stärker ist als eine Amplitude der Kraft Fec.

10. Verfahren zum Messen einer Winkelgeschwindigkeit eines Trägers, auf dem der Inertialsensor (10) angeordnet ist, umfassend:

    - eine Kalibrierungsphase des Inertialsensors unter Implementierung des Kalibrierungsverfahrens (100) nach einem der Ansprüche 1 bis 9, die bei Inbetriebnahme des Inertialsensors ausgeführt wird,

    - einen Betriebsschritt **D** des Inertialsensors, wobei die gespeicherten Matrizen $\widehat{inv(E)}$ und $\widehat{inv(D)}$ angelegt werden, wobei die geschätzte inverse Anregungsmatrix $\widehat{inv(E)}$ auf die durch die Servosteuerungen bestimmten Anregungskräfte angelegt wird, bevor sie an die Anregungswandler geleitet werden, um die Anregungskräfte vorab zu kompensieren, und die geschätzte inverse Detektionsmatrix $\widehat{inv(D)}$ auf die erkannten Bewegungswerte angelegt wird, um die erkannten Bewegungswerte zu korrigieren.

11. Verfahren zum Messen einer Winkelgeschwindigkeit eines Trägers, auf dem der Inertialsensor (10) angeordnet ist, umfassend:

    - eine Kalibrierungsphase des Inertialsensors unter Implementierung des Kalibrierungsverfahrens (100) nach einem der Ansprüche 1 bis 9, die ausgeführt wird, wenn der Sensor in Betrieb ist, wobei die Messung der Winkelgeschwindigkeit dann unterbrochen wird,
    - einen Schritt **D'** zur Messung der Winkelgeschwindigkeit, der während der Kalibrierungsphase durchgeführt wird und von einem zusätzlichen Inertialsensor, der ebenfalls auf dem Träger angeordnet ist, ausgeführt wird,

    - einen Betriebsschritt **D** des Inertialsensors, wobei die gespeicherten Matrizen $\widehat{inv(E)}$ und $\widehat{inv(D)}$ angelegt werden, wobei die geschätzte inverse Anregungsmatrix $\widehat{inv(E)}$ auf die durch die Servosteuerungen bestimmten Anregungskräfte angelegt wird, bevor sie an die Anregungswandler geleitet werden, um die Anregungskräfte vorab zu kompensieren, und die geschätzte inverse Detektionsmatrix $\widehat{inv(D)}$ auf die erkannten Bewegungswerte angelegt wird, um die erkannten Bewegungswerte zu korrigieren.

12. Inertialwinkelsensor (10), umfassend:

    - einen Resonator (Res), der eine ebene und achsensymmetrische Struktur um zwei zueinander senkrechte Achsen x und y aufweist, die ein Sensorkoordinatensystem xy definieren, und zwei bewegliche Schwingungsmassen (M1, M2) umfasst, die umeinander herum angeordnet sind und konfiguriert sind, um in Gegenphase mit einer Schwingungsfrequenz ($\omega$) und in einer Richtung x' zu schwingen, die ein Wellenkoordinatensystem x'y' definiert, wobei die Schwingungswelle (OV) entlang x' einen elektrischen Winkel ($\theta$) in Bezug auf die x-Achse bildet,
    - wobei der Resonator weiter eine Vielzahl von elektrostatischen Wandlern umfasst, die durch elektrische Spannungen angesteuert werden und entlang der zwei Achsen x und y arbeiten, von denen mindestens einer auf mindestens einer der zwei Massen:

        - ein Paar Anregungswandler (Et), an die Anregungskräfte jeweils entlang x und y angelegt werden, über eine Vielzahl von Anregungssteuerungen, um die Schwingungswelle in einer gewünschten Form und schwingend entlang x' zu halten, und ein Paar Detektionswandler (Dt), die konfiguriert sind, um die Bewegungen der Schwingungswelle entlang x und y zu erkennen,

- ein Paar Quadratur-Bias-Kompensationswandler (TQ), die über eine Quadratursteuerung CTxy angesteuert werden, und ein Paar Frequenzeinstellwandler (TF), die jeweils über eine Frequenzsteuerung CTx gemäß x und eine Frequenzsteuerung CTy gemäß y angesteuert werden, wobei die drei Steuerungen CTx, CTy und CTxy als Trimmsteuerungen CTi indiziert mit i, wobei i=1,2, 3, bezeichnet werden,

wobei die Anregungssteuerungen durch Servosteuerungen anhand der erkannten Bewegungen bestimmt werden, wobei der Sensor in einem Gyrometer-Modus arbeitet,

**dadurch gekennzeichnet, dass** die drei Trimmsteuerungen CTi konfiguriert sind, um sequenziell eine sinusförmige Störung mit einer Steifigkeit PSi, die eine Störfrequenz fi aufweist, für mindestens zwei elektrische Winkel ($\theta$j) der Schwingungswelle anzulegen, und dass es eine Verarbeitungseinheit (UT) umfasst, die konfiguriert ist zum:

- Bestimmen und Speichern einer geschätzten Anregungskraft Fei für jede angelegte Störung, die bei Anwesenheit der Störung PSi auf den Resonator angelegt werden soll, anhand der durch die Servosteuerungen bestimmten Anregungssteuerungen,

- Bestimmen, anhand der drei im vorhergehenden Schritt gespeicherten geschätzten Anregungskräfte Fei i=1,2,3, in Abhängigkeit von den elektrischen Winkeln und den angelegten Störungen, von drei Matrizen 2x2 M'i, wobei eine Matrix M'i die Antwort des Gyrometers auf die Störung PSi darstellt,

- Bestimmen und Speichern einer geschätzten inversen Anregungsmatrix $\widehat{inv(E)}$ und einer geschätzten inversen Detektionsmatrix $\widehat{inv(D)}$ anhand der drei im vorhergehenden Schritt bestimmten Matrizen M'i, wobei eine Anregungsmatrix E und eine Detektionsmatrix D jeweils die Auswirkungen der Anregungskette und die Wirkung der Detektionskette des Sensors darstellen,

wobei die geschätzte inverse Anregungsmatrix $\widehat{inv(E)}$ dazu bestimmt ist, auf die durch die Servosteuerungen bestimmten Anregungskräfte angelegt zu werden, bevor sie an die Anregungswandler geleitet werden, um die Anregungskräfte vorab zu kompensieren, und wobei die geschätzte inverse Detektionsmatrix $\widehat{inv(D)}$ dazu bestimmt ist, auf die erkannten Bewegungswerte angelegt zu werden, um die erkannten Bewegungswerte zu korrigieren, wenn der Sensor in Betrieb ist.

## Claims

1. Method (100) for calibrating an inertial angular sensor (10), the inertial sensor comprising:

- a resonator (Res) having a flat and axisymmetrical structure about two axes x and y, perpendicular to one another, defining a sensor system xy and comprising two vibrating movable masses (M1, M2) disposed around one another, configured to vibrate in phase opposition at a vibration frequency ($\omega$) and along a direction x' defining a wave system x'y', the vibration wave (OV) along x' forming an electrical angle ($\theta$) with respect to the axis x,
- the resonator further comprising a plurality of electrostatic transducers controlled by electrical voltages and operating along the two axes x and y, of which at least one, on at least one of the two masses,
- a pair of detection transducers (Dt) configured to detect the movements of the vibration wave along x and y, and a pair of excitation transducers (Et) to which excitation forces are applied respectively along x and y, via a plurality of excitation commands determined by drives from detected movements, and to maintain the vibration wave in a desired form and vibrating along x', and
- a pair of transducers for compensating a quadrature bias (TQ), controlled via a quadrature command CTxy, and a pair of frequency adjustment transducers (TF), controlled via respectively a frequency command CTx along x and a frequency command CTy along y, the three commands CTx, CTy and CTxy being called trim commands CTi indexed i with i=1,2,3,

the method being applied when the sensor is in operation according to a gyrometer mode, and **characterised in that** it comprises the steps comprising of:

**A** for at least two electrical angles (θj) of the vibration wave:

**A1** sequentially applying, via each of the three trim commands CTi, a sinusoidal stiffness disturbance PSi having a disturbance frequency fi, and for each disturbance applied:

**A11** determining and storing an **estimated excitation force Fei** to be applied to the resonator in the presence of said disturbance PSi, from the excitation commands determined by the drives,

**B** determining from the three estimated excitation forces Fei i=1,2,3 stored in step **A11,** as a function of said electrical angles and disturbances applied, three matrices 2×2 M'i, a matrix M'i being representative of the gyrometer response to the disturbance PSi,

**C** determining and storing an estimated inverse excitation matrix $\widehat{inv(E)}$ and an estimated inverse detection matrix $\widehat{inv(D)}$ from the three matrices M'i determined in step **B,** an excitation matrix E and a detection matrix D being representative of the effects of the excitation chain and the effect of the detection chain of the sensor.

2. Method according to claim 1, wherein each estimated excitation force Fei is broken down into an estimated standard excitation force Fec corresponding to a standard drive of the sensor and an estimated disturbance compensation excitation force Fepi,
and wherein step **B** comprises the substeps comprising of:

- **B1** demodulating each estimated excitation force Fei by the vibration frequency (ω), then by the associated disturbance frequency fi to obtain an amplitude (AFpei) of said disturbance compensation excitation force Fepi,
- **B2** determining said matrix M'i from said amplitude of said force Fepi.

3. Method according to any one of the preceding claims, wherein step **A** is implemented with a plurality of electrical angles, said matrices M'i thus being determined in step **B** by a statistical filtering minimising the contribution of the noise of the sensor.

4. Method according to any one of the preceding claims, wherein each representative matrix M'i determined in step **B** is of the form:

$$\text{M'i} = \widehat{inv(E)}.\,\text{Mi}.\,\widehat{inv(d)}$$

Mi defined by: $M1 = \begin{bmatrix} 1 & 0 \\ 0 & 0 \end{bmatrix}; M2 = \begin{bmatrix} 0 & 0 \\ 0 & 1 \end{bmatrix}$ ; and $M3 = \begin{bmatrix} 0 & 1 \\ 1 & 0 \end{bmatrix}$

5. Method according to the preceding claim, wherein the matrices $\widehat{inv(E)}$ and $\widehat{inv(D)}$ close to unit matrices are considered, and being expressed:

$$\widehat{inv(E)} = 1 + A$$

$$\widehat{inv(D)} = 1 + B$$

the three representative matrices M'i determined in step **B** thus being expressed, by disregarding the second order term:

$$\text{M'i} = \text{AMi} + \text{MiB}$$

and in which step **C** comprises a substep comprising of determining said matrices A and B from said matrices M'i.

6. Method according to any one of the preceding claims, wherein said disturbance frequencies fi i=1,2,3 are between 1,000 times and 100,000 times less than the vibration frequency of the wave (ω).

7. Method according to any one of the preceding claims, wherein said frequencies fi are less than 10Hz.

8. Method according to any one of the preceding claims, wherein each disturbance PSi has an identical amplitude for all the electrical angles.

9. Method according to any one of the preceding claims, wherein each estimated excitation force Fei is broken down into an estimated standard excitation force Fec corresponding to a standard drive of the sensor and an estimated disturbance compensation excitation force Fepi, and wherein an amplitude of the disturbance is chosen, such that an amplitude of the force Fepi is at least 10 times greater than an amplitude of the force Fec.

10. Method for measuring an angular speed of a carrier on which said inertial sensor (10) is disposed, comprising:

- a phase of calibrating said inertial sensor implementing the calibration method (100) according to any one of claims 1 to 9, carried out upon starting up the inertial sensor,

- a step **D** of operating said inertial sensor, in which said stored matrices $\widehat{inv(E)}$ and $\widehat{inv(D)}$ are applied, said estimated inverse excitation matrix $\widehat{inv(E)}$ being applied to the excitation forces determined by said drives, prior to the sending over the excitation transducers, so as to pre-compensate for said excitation forces, and said estimated inverse detection matrix $\widehat{inv(D)}$ being applied to the detected movement values, so as to correct said detected movement values.

11. Method for measuring an angular speed of a carrier on which said inertial sensor (10) is disposed, comprising:

- a phase of calibrating said inertial sensor implementing the calibration method (100) according to any one of claims 1 to 9, carried out when the sensor is being operated, the measuring of the angular speed thus being interrupted,

- a step **D'** of measuring the angular speed, implemented during the calibration phase, carried out by an additional inertial sensor, also disposed on the carrier,

- a step **D** of operating said inertial sensor, in which said stored matrices $\widehat{inv(E)}$ and $\widehat{inv(D)}$ are applied, said estimated inverse excitation matrix $\widehat{inv(E)}$ being applied to the excitation forces determined by said drives, prior to the sending over the excitation transducers, so as to pre-compensate for said excitation forces, and said estimated inverse detection matrix $\widehat{inv(D)}$ being applied to the detected movement values, so as to correct said detected movement values.

12. Inertial angular sensor (10), comprising:

- a resonator (Res) having a flat and axisymmetrical structure about two axes x and y, perpendicular to one another, defining a sensor system xy and comprising two vibrating movable masses (M1, M2) disposed around one another, configured to vibrate in phase opposition at a vibration frequency (ω) and along a direction x' defining a wave system x'y', the vibration wave (OV) along x' forming an electrical angle (θ) with respect to the axis x,
- the resonator further comprising a plurality of electrostatic transducers controlled by electrical voltages and operating along the two axes x and y, of which at least one, on at least one of the two masses,

  - a pair of detection transducers (Et) to which excitation forces are applied respectively along x and y, via a plurality of excitation commands, to maintain the vibration wave in a desired form and vibrating along x', and a pair of detection transducers (Dt) configured to detect the movements of the vibration wave along x and y,
  - a pair of transducers for compensating a quadrature bias (TQ), controlled via a quadrature command CTxy, and a pair of frequency adjustment transducers (TF), controlled via respectively a frequency command CTx along x and a frequency command CTy along y, the three commands CTx, CTy and CTxy being called trim commands CTi indexed i with i=1,2,3,

  said excitation commands being determined by drives from the detected movements, the sensor operating according to a gyrometer mode,
  **characterised in that** the three trim commands CTi are configured to sequentially apply a sinusoidal stiffness disturbance PSi having a disturbance frequency fi, for at least two electrical angles (θj) of the vibration wave, and **in that** it comprises a processing unit (UT), configured for:

  - determining and storing, for each applied disturbance, an estimated excitation force Fei to be applied to the resonator in the presence of said disturbance PSi, from the excitation commands determined by the drives,
- determining from said three estimated excitation forces Fei i=1,2,3 stored in the preceding step, as a function of said electrical angles and disturbances applied, three matrices 2×2 M'i, a matrix M'i being representative of the gyrometer response to the disturbance PSi,

- determining and storing an estimated inverse excitation matrix $\widehat{inv(E)}$ and an estimated inverse detection matrix $\widehat{inv(D)}$ from the three matrices M'i determined in the preceding step, an excitation matrix E and a detection matrix D being representative of the effects of the excitation chain and the effect of the detection chain of the sensor,

said estimated inverse excitation matrix $\widehat{inv(E)}$ being intended to be applied to the excitation forces determined by said drives, prior to the sending over the excitation transducers, so as to pre-compensate for said excitation forces, and said estimated inverse detection matrix $\widehat{inv(D)}$ being intended to be applied to the detected movement values, so as to correct said detected movement values, when the sensor is operating.

FIG.1

M2

M1

RC

RS

RS

A

A

x

y

O

x

y

z

FIG.2

FIG.3

FIG.4

$$\begin{bmatrix} FX \\ FY \end{bmatrix} = E \begin{bmatrix} FXe \\ FYe \end{bmatrix}$$

$$\begin{bmatrix} Xe \\ Ye \end{bmatrix} = D \begin{bmatrix} X \\ Y \end{bmatrix}$$

FIG.5

FIG.6

FIG.7

FIG.8

FXe ——
FYe ——

$\overbrace{inv(E)}$

E

FX —— FX

—— FY

## FIG.9

D

$\overbrace{inv(D)}$

X ——
Y ——

—— Xe

—— Ye

## FIG.10

100

Pour au moins 2 angles $\theta_j$

A

A1 ——

Appliquer séquentiellement sur chacune des
commandes de trim CTi   i=1,2,3
une perturbation sinusoïdale PSi, fi

A11 ——

Pour chaque perturbation :
Déterminer et mémoriser une force d'excitation
estimée Fei

B

Déterminer 3 matrices 2x2 M'i   i=1,2,3
à partir des Fei

C

Déterminer $\widehat{inv(E)}$ et $\widehat{inv(D)}$
à partir de M'i  i=1,2,3

FIG.11

FIG.12

FIG.13

# EP 4 185 841 B1

## RÉFÉRENCES CITÉES DANS LA DESCRIPTION

**Documents brevets cités dans la description**

- EP 2960625 A

- US 9927256 B